(19) Europäisches Patentamt
European Patent Office
Office européen des brevets

(11) Veröffentlichungsnummer: **0 255 677 B1**

(12) **EUROPÄISCHE PATENTSCHRIFT**

(45) Veröffentlichungstag der Patentschrift: **08.12.93**

(51) Int. Cl.[5]: **C08G 18/10**, C08G 18/50, C08G 18/40

(21) Anmeldenummer: **87110841.1**

(22) Anmeldetag: **27.07.87**

Die Akte enthält technische Angaben, die nach dem Eingang der Anmeldung eingereicht wurden und die nicht in dieser Patentschrift enthalten sind.

(54) **Verfahren zur Herstellung von Urethan- und/oder Harnstoff-gruppen-haltige Polyaminohydroxyl-Verbindungen und ihre Verwendung zur Herstellung von Polyharnstoffurethanen.**

(30) Priorität: **07.08.86 DE 3626661**

(43) Veröffentlichungstag der Anmeldung: **10.02.88 Patentblatt 88/06**

(45) Bekanntmachung des Hinweises auf die Patenterteilung: **08.12.93 Patentblatt 93/49**

(84) Benannte Vertragsstaaten: **AT BE CH DE ES FR GB IT LI NL SE**

(56) Entgegenhaltungen:
**EP-A- 0 079 536**
**DE-A- 2 948 419**
**DE-A- 3 244 913**

(73) Patentinhaber: **BAYER AG**

**D-51368 Leverkusen(DE)**

(72) Erfinder: **Rasshofer, Werner, Dr.**
**Leopold-Gmelin-Strasse 31**
**D-5000 Köln 80(DE)**

**EP 0 255 677 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Verbindungen, bevorzugt solchen mit höheren Molekulargewichten, welche primäre, über Urethan- und/oder Harnstoffgruppen an das Molekülskelett gebundene aliphatische und/oder aromatiche Aminogruppen, bevorzugt aromatische Aminogruppen, sowie Hydroxylgruppen und gegebenenfalls NCO-inerte Gruppen besitzen.

Das Verfahren geht von NCO-Verbindungen aus, die durch Umsetzung von Polyisocyanaten mit Hydroxyl- und gegebenenfalls NCO-inerte-Gruppen aufweisenden Verbindungen entstehen, wobei die Umsetzung jedoch abgebrochen wird, wenn bereits ein Teil, bevorzugt mindestens die Hälfte, jedoch nicht alle, zur Umsetzung mit den OH-Verbindungen befähigten NCO-Gruppen, reagiert haben. Man erhält also NCO-Verbindungen mit Hydroxyl- und gegebenenfalls zusätzlich NCO-inerten Gruppen, die dann im Prinzip bekannten NCO-Hydrolyseverfahren unterworfen werden.

Dabei entstehen Verbindungen mit über Urethangruppen und/oder Harnstoffgruppen an das Molekülskelett fixierten primären Aminogruppen, welche darüber hinaus Hydroxylgruppen und gegebenenfalls auch NCO-inerte Gruppen aufweisen.

Die Erfindung betrifft weiterhin die Verwendung der erfindungsgemäß zugänglichen Verbindungen zur Herstellung von Polyharnstoffurethanen.

In der EP-B 81 701 werden elastische PU-Formkörper mit geschlossener Oberflächenschicht dadurch erhalten, daß man Polyether verwendet, deren NCO-reaktive Gruppen zumindest 50 % primäre und/oder sekundäre Aminoendgruppen (neben gegebenenfalls Hydroxylgruppen) enthalten und ein Molekulargewicht von 1.800 bis 12.000 aufweisen. Es können Polyether verwendet werden, die durch Druckaminierung von Polyetherpolyolen, Hydrierung von Acrylnitriladdukten an Polyetherpolyolen, als Umsetzungsprodukte von Polyolen mit Isatosäureanhydrid oder durch Hydrolyse von NCO-Verbindungen nach DE-A 2 948 419 erhalten werden und beispielsweise mit Polyetherpolyolen zu einem Polyethergemisch der beanspruchten Zusammensetzung vermischt werden, Es können auch Aminopolyether durch partielle Druckhydrierung in Gegenwart von Ammoniak erhalten werden, die z.B. 80 Äquivalentprozent Aminogruppen und 20 Äquivalentprozent an Hydroxylgruppen aufweisen.

Nach der US-A 4 588 840 werden Polyoxyalkylen-arylpolyamine durch Umsetzung von Polyoxyalkylenpolyolen mit aromatischen einen mit Wasserstoff unter Druck und in Gegenwart von Nickel, Kobalt, Kupfer oder Mangan-haltigen Katalysatoren erhalten.

Aminoverbindungen, wie sie - etwa nach EP-A 1 50 275 durch Hydrolyse der entsprechenden NCO-Vorstufen, insbesondere NCO-Prepolymeren, hergestellt werden, sind zur Herstellung von Polyurethan-(harnstoff)-Elastomeren ein grundsätzlich gut geeignetes Ausgangsmaterial.

Gerade die hierfür besonders geeigneten höhermolekularen Verbindungen besitzen jedoch relativ hohe Viskositäten, z.B. 10.000 bis 100.000 mPas/25 °C, so daß sie nur mit erhöhtem Aufwand zu verarbeiten sind, Diese hohe Viskosität rührt daher, daß die zur Herstellung der bevorzugten Aminoverbindungen bevorzugten Ausgangsverbindungen sogenannte NCO-Prepolymere darstellen, die durch Reaktion von Polyolen, bevorzugt Polyetherpolyolen, mit überschüssigen Mengen an Polyisocyanaten zustande kommen und Urethangruppen enthalten, Schon diese NCO-Prepolymeren haben wesentlich höhere Viskosität als die zugrundeliegenden Polyetherpolyole (erfahrungsgemäß etwa die doppelte Viskosität).

Es war also Aufgabe der Erfindung, ein Verfahren zur Herstellung von Verbindungen zur Verfügung zu stellen, die bei deutlich veringerter Viskosität ähnlich zur Herstellung von Polyurethan(harnstoff)-Elastomeren geeignet sind, wie die nach EP B 1 50 275 hergestellten Verbindungen, und darüber hinaus noch weitere Vorteile haben sollten.

Gegenstand der Erfindung ist ein Verfahren zur Herstellung von Verbindungen, welche einen Gehalt an Urethan- und/oder Harnstoffgruppen von 0,295 bis 29,5 Gew.-%, ein Molekulargewicht von 400 - 12000 und einen Gehalt an primären Amino- und Hydroxylgruppen von zusammen 0,165 - 16,5 Gew.-% aufweisen, wobei die gesamte Funktionalität von Amino- und Hydroxylgruppen > 1 bis 8 beträgt und wobei das Äquivalentverhältnis zwischen Amino- und Hydroxylgruppen zwischen 99 : 1 und 5 : 95 liegt, durch Hydrolyse von NCO-Gruppen aufweisenden Verbindungen, das dadurch gekennzeichnet ist, daß man

a) in einer 1. Stufe ein Polyisocyanat mit einer Hydroxy- sowie gegebenenfalls Amino- und gegebenenfalls Thiolgruppen enthaltenden Verbindung mit einem MG von 62 - 12000 umsetzt, bis ein Vorpolymer gebildet worden ist, welches 0,3 - 25,9 Gew.-% an freien NCO-Gruppen und noch so viele freie Hydroxylgruppen enthält, daß das Äquivalentverhältnis zwischen NCO- und OH-Gruppen zwischen 99 : 1 und 5 : 95 liegt, und

b) anschließend in einer 2. Stufe dieses Vorpolymer mit mindestens 0,75 Mol Wasser pro NCO-Gruppe, gegebenenfalls in Gegenwart von Lösungsmitteln und gegebenenfalls in Gegenwart von katalytisch wirkenden Verbindungen in an sich bekannter Weise hydrolysiert.

Die Produkte des erfindungsgemäßen Verfahrens sind vorzugsweise Verbindungen des Molekulargewichts 1.000 bis 7.000, der mittleren Funktionalität 1,5 bis 6, besonders bevorzugt 2 bis 4, mit einem Gehalt an Hydroxyl- plus Aminogruppen von 16,5 Gew.-% bis 0,165 Gew.-%, einem Gehalt an Urethan-Gruppen-NHCOO- und/oder Harnstoffgruppen-NHCONH- von 29,5 bis 0,295 Gew.-%, einem Äquivalentverhältnis von $NH_2$:OH-Gruppen von 80:20 bis 20:80, insbesondere $66,\overline{6}:33,\overline{3}$ bis $33,\overline{3}:66,\overline{6}$.

Bevorzugt werden ferner erhalten Urethan- und Harnstoff-Gruppen aufweisende Verbindungen mit primären Aminogruppen, Hydroxylgruppen und gegebenenfalls inerten Gruppen nach obigen Kennzeichen, welch auch Polyether sequenzen aufweisen und insbesondere der Formel (I)

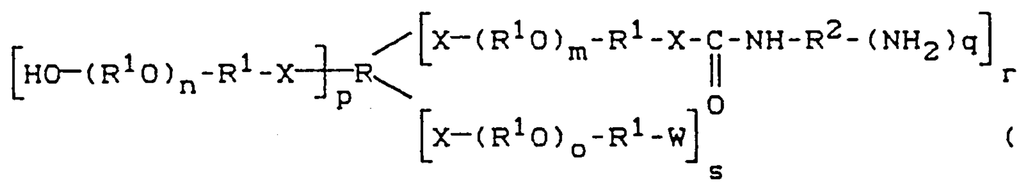

(I)

mit der Bedeutung

| | |
|---|---|
| X | NH, O |
| W | H, einwertiger, organischer Rest, (z.B. Alkyl-, Aryl- oder Alkoxyrest) oder bevorzugt [-OCONH-einwertiger Rest] bzw. -[NHCONH-einwertiger Rest] (einwertiger Rest ist z.B. Alkyl, Aryl oder Alkoxyrest) |
| R | Rest, wie er durch Entfernung von (p + r + s)XH-Gruppen aus einem (p + r + s)-wertigen Polyamin, Polyalkohol oder Aminoalkohol entsteht, |
| $R^1$ | gegebenenfalls alkyl- oder aryl-substituierter $C_2$-$C_4$-Alkylenrest, insbesondere ein Ethylen- und/oder 1,2-Propylen-Rest, |
| $R^2$ | (q + 1)-wertiger Rest, wie er durch Entfernung von (q + 1) NCO-Gruppen aus einem (q + 1)-wertigen Polyisocyanat entsteht, |
| q | Werte von 1 bis 2 aufweisen, |
| n,m,o | so gewählt sind, daß das Molekulargewicht 400 bis 12.000 beträgt, |
| p,r,s | so gewählt sind, daß (p + r + s) = 2 bis 8, bevorzugt 2 bis 6, besonders bevorzugt 2 bis 4 ist, wobei |
| p:s = | 100:0 bis $33,\overline{3}:66,\overline{6}$, vorzugsweise 100:0 bis 80:20, insbesondere 99,1:0,1 bis 90:10, |
| r:p = | 99:1 bis 5:95, besonders bevorzugt 80:20 bis 20:80, insbesondere $66,\overline{6}:33,\overline{3}$ bis $33,\overline{3}:66,\overline{6}$ |
| r:s = | 100:0 bis $33,\overline{3}:66,\overline{6}$, vorzugsweise 100:0 bis 80:20, insbesondere 99,9:0,1 bis 90:10 |

entsprechen.

Besonders bevorzugt werden Verbindungen der genannten Art, bei denen die Zahl der Äquivalente der primären Aminogruppen einen Wert von 2 ±0,25, bevorzugt von etwa 2 ±0,1 ergibt. Im Falle der Polyetherverbindungen der Formel (I) bedeutet dies, daß r einen Wert von 2 ±0,25, bevorzugt 2 ±0,1 aufweist.

Eine bevorzugte Ausführungsform des Verfahrens zur Herstellung der obengenannten Verbindungen ist dadurch gekennzeichnet, daß man

a) aus Stufe 1, erhaltene

Urethan- und/oder Harnstoffgruppen-haltige NCO-Verbindungen, welche eine Funktionalität von >1 bis 8, bevorzugt 1,5 bis 6, insbesondere 2 bis 4 aufweisen, und

0,3 bis 25,9 Gew.-%, vorzugsweise 0,4 bis 15 Gew.-%, insbesondere 1 bis 13 Gew.-% an freien NCO-Gruppen

und Hydroxyl- und gegebenenfalls NCO-inerte End-Gruppen

Sowie Urethan- und/oder Harnstoffgruppen, in Mengen von 0,295 bis 29,5 Gew.-% aufweisen,

wobei das Verhältnis

von NCO-Gruppen zu Hydroxylgruppen von 99:1 bis 5:95 vorzugsweise 95:5 bis 5:95, besonders bevorzugt 80:20 bis 20:80 und insbesondere $66,\overline{6}:33,\overline{3}$ bis $33,\overline{3}:66,\overline{6}$,

von NCO-Gruppen zu NCO-inerten End-Gruppen von 100:0 bis $33,\overline{3}:66,\overline{6}$, bevorzugt 100:0 bis 80:20, besonders bevorzugt 100:0 bis 90:10,

und von Hydroxylgruppen zu NCO-inerten End-Gruppen von 100:0 bis $33,\overline{3}:66,\overline{6}$, bevorzugt 100:0 bis 80:20, besonders bevorzugt 100:0 bis 90:10 beträgt,

b) mit mindestens 0,75 Mol Wasser pro NCO-Gruppe, bevorzugt mit mehr als 1 Mol Wasser pro NCO-Gruppe,

c) gegebenenfalls in Gegenwart von katalytisch wirkenden Verbindungen auf der Basis von basischen Verbindungen, tertiaren Aminen oder Metallkatalysatoren, vorzugsweise basischen Verbindungen

d) und gegebenenfalls in Gegenwart von Lösungsmitteln

mit oder ohne Isolierung einer Zwischenstufe hydrolysiert und die Polyaminohydroxylverbindungen, gegebenenfalls nach üblichen Reinigungsoperationen, z.B. durch Phasentrennung oder Extraktion, isoliert.

Die inerte Endgruppe ist insbesondere durch Umsetzung der OH- und/oder Aminogruppen mit monofunktionell reagierenden Verbindungen in einfacher Reaktion unter teilweisem "Verschließen" von funktionellen Gruppen mehrwertiger Verbindungen, z.B. Triolen oder Tetrolen zuganglich, z.B. durch Acylierung oder Umsetzung mit Monoisocyanaten, oder auch durch Methoxylierung oder Veresterung mit anorganischen monofunktionellen Säuren. Diese "Verschließung" der funktionellen Gruppen wird vorzugsweise vor der Umsetzung mit den Di- oder Polyisocyanaten zum Hydroxyl-haltigen NCO-Prepolymer vorgenommen.

Erfindungsgemäß bevorzugt ist eine Verfahrensform, dadurch gekennzeichnet, daß man die oben gekennzeichneten NCO/OH-Gruppen tragenden Verbindungen a)

b) durch Vermischen mit Wasser,

c) und einer Base

in ein Carbamatgruppen aufweisende Verbindungen enthaltendes Reaktionsgemisch überführt und dieses zur Gewinnung der erfindungsgemäßen Verbindungen unter Zerlegung der Carbamatgruppen aufweisenden Verbindungen thermisch bei Temperaturen von Raumtemperatur bis 200 °C behandelt und/oder mit einer Säure behandelt und mit einem organischen Solvens extrahiert.

Bevorzugt ist ferner eine Verfahrensform, dadurch gekennzeichnet, daß man die oben gekennzeichneten NCO- und OH-Gruppen tragenden Verbindungen a)

b) mit Wasser,

c) in Gegenwart von basischen Katalysatoren und

d) in Gegenwart von mindestens zum Teil wassermischbaren, bevorzugt aprotisch-dipolaren Lösungsmitteln, insbesondere Dimethylformamid,

in im wesentlichen homogener Phase bei einer Temperatur zwischen 25 und 210 °C direkt hydrolysiert.

Die Erfindung betrifft schließlich auch die Verwendung der im erfindungsgemäßen Verfahren erhaltenen Verbindungen als Ausgangsverbindungen bei der Herstellung von gegebenenfalls zelligen Polyurethan-polyharnstoffen, insbesondere bei der Herstellung von elastomeren Polyurethan-polyharnstoff-Formteilen mit Oberflächenhaut (für den Automobilbereich) nach dem RIM-Verfahren, unter Verwendung von geschlossenen Formen.

Aus der DE-A 3 244 913 sind höhermolekulare, aromatische Polyamine bereits bekannt, die gegebenenfalls Reste von niedermolekularen Verbindungen mit gegenüber Isocyanaten reaktiven Endgruppen, z.B. OH-Gruppen enthalten, welche dadurch hergestellt werden, daß man in einem Simultan- und Eintopfverfahren (ohne vorherige Bildung eines NCO-Prepolymers) bei Temperaturen von -20 °C bis +175 °C Polyisocyanate, höhermolekulare Polyole des Molekulargewichts 400 bis 10.000, gegebenenfalls niedermolekulare Polyole eines Molekulargewichts von 62 bis 399 in Gegenwart von überschüssigen Mengen an Wasser, gegebenenfalls in Gegenwart von wassermischbaren Lösungsmitteln und gegebenenfalls in Gegenwart von Katalysatoren, in bestimmten Verhältnissen vermischt, gegebenenfalls erwärmt und dann das aminische Produkt abtrennt.

Die erfindungsgemäß hergestellten Verbindungen sind vorteilhaft gegenüber den Verbindungen nach DE-A 3 244 913, da sie weniger freie, niedermolekulare Di- und/oder Polyamine (aus den Di- oder Polyisocyanaten) und weniger Polyol-Ausgangsmaterialien (welche noch nicht mit den Polyisocyanaten in der Simultan-Reaktion reagiert hatten) besitzen und insgesamt eine definiertere Struktur aufweisen und trotzdem eine relativ (im Verhältnis zu den jeweiligen Ausgangsmaterialien) niedrige Viskosität besitzen.

Die im erfindungsgemäßen Verfahren einzusetzenden NCO-Verbindungen h) sind NCO-Prepolymere, wie sie in an sich bekannter Weise durch Umetzung von niedermolekularen und/oder höhermolekularen Hydroxy- und gegebenenfalls Amino- und gegebenenfalls Thiolgruppen als reaktive Gruppen enthaltende Verbindungen (Molekulargewicht 62 bis ca. 12.000) mit Polyisocyanaten entstehen, wobei aber die NCO-Prepolymerbildung vor der vollständigen Umsetzung aller OH-Gruppen abgebrochen wird und diese nicht-ausreagierten NCO-Prepolymeren dann an ihren NCO-Gruppen zu Aminogruppen hydrolysiert werden,

Als Polyisocyanate zur Herstellung der freie NCO-Gruppen aufweisenden Verbindungen kommen im Prinzip alle aromatischen, aliphatischen (einschließlich cycloaliphatischen oder araliphatischen) und heterocyclischen Polyisocyanate (einschließlich der Diisocyanate) infrage, wie sie z.B. von W. Siefken in Justus Liebigs Annalen der Chemie, 562, S, 75 bis 136, beschrieben werden, wie sie, zusammen mit den für diese Umsetzungen geeigneten, niedermolekularen und/oder höhermolekularen Hydroxy- und/oder Amino-und/oder Thiolgruppen enthaltenden
Verbindungen des Molekulargewichtsbereichs 32 und 60 bis 12.000, auf S. 12-23 der DE-A 3 223 397 aufgeführt sind. Bevorzugt werden Di- und/oder Polyisocyanate mit einer mittleren NCO-Funktionalität von 2 bis 3.

Besonders bevorzugt sind aromatische Di-/Polyisocyanate, bevorzugt die 2,4- und/oder 2,6-Toluylendiisocyanate und 4,4'- und/oder 2,4'-Diisocyanatodiphenylmethane, insbesondere das 2,4-Toluylendiisocyanat.

Zur Herstellung der Urethan- und/oder Harnstoff-modifizierten Prepolymeren a) ebenfalls geeignete modifizierte Polyisocyanate sind beispielsweise Urethangruppen-haltige Polyisocyanate (durch Modifizierung mit niedermolekularen Polyolen entstanden), Harnstoffgruppen aufweisende Polyisocyanate (Wassermodifizierung, DE-C 1 230 778), Biuretgruppen aufweisende Polyisocyanate (US-A 3 124 605, 3 201 372, GB-A 889 050), Isocyanuratgruppen aufweisende Polyisocyanate (DE-C 1 022 789 und 1 222 067) sowie Uretdion- oder Uretonimingruppen enthaltende, dimere oder oligomere Polyisocyanate, die bekannte Verbindungen sind, oder nach bekannten Verfahren zugänglich sind. Eine Reihe solcher Uretdionpolyisocyanate ist in Analytical Chemistry of the Polyurethanes, Band 16/III, High-Polymers-Series (Wiley 1969) aufgeführt. Solche modifizierten Polyisocyanate mit Urethan- und/oder Harnstoff- und/oder Biuret- und/oder Uretdion- und/oder Isocyanurat- und/oder Uretonimin-Gruppen, wie sie zur Herstellung der NCO- und OH-Gruppen tragenden Komponente a) einsetzbar sind, haben üblicherweise einen NCO-Gehalt von 5 bis 40 Gew.-%, bevorzugt 10 bis 25 Gew.-%.

Die mit den Polyisocyanaten zwecks Herstellung der NCO- und OH-Gruppen aufweisenden, Urethan- und/oder Harnstoffgruppen besitzenden NCO-Verbindung g) zur Reaktion kommenden, nieder- und/oder höhermolekularen, mehrfunktionellen Hydroxy- und/oder Amino- und/oder Thiolgruppen-Verbindungen des Molekulargewichtsbereichs 32 und 60 bis 20.000, können noch im Sinne der Isocyanatadditionsreaktion NCO-inerte Endgruppen tragen. Diese werden bevorzugt so eingeführt, daß ein bestimmter Teil der Hydroxy- und/oder Amino- und/oder Thiolgruppen durch geeignete Maßnahmen in inerte Gruppen umgewandelt werden. Geeignete Maßnahmen sind der Literatur zu entnehmen. Dazu gehören z.B. die Umwandlung von OH-Gruppen der Ausgangspolyole in Ether, (z.B. mit Dimethylsulfat), in Urethangruppen (mit Monoisocyanaten), mit Halogenierungsmitteln (in Halogenidgruppen), von Aminogruppen mit Monoisocyanaten (in Harnstoffe) oder mit Ketonen (in Azomethingruppen).

Bevorzugt werden die inerten Gruppierungen vor der Reaktion mit den Di-/Polyisocyanaten eingeführt, bevorzugte Reagentien sind Monoisocyanate.

Die so erhaltenen Verbindungen mit Hydroxyl- und/oder Amino-Gruppen sowie mit gegebenenfalls (im Sinne der NCO-Additionsreaktion) inerten Gruppen werden mit Polyisocyanaten zur Reaktionskomponente a) umgesetzt. Dabei werden die NCO-reaktiven (z.B. OH-Gruppen) nur teilweise mit den NCO-Gruppen der Polyisocyanate zur Reaktion gebracht und vor vollständiger Umsetzung der NCO-Gruppen mit den OH-Gruppen die NCO-Gruppen zu primären Aminogruppen hydrolysiert.

Für das erfindungsgemäße Verfahren werden NCO-Prepolymere a) bevorzugt, die aus höhermolekularen, 2- oder mehrfunktionellen Polyolen (Molekulargewichte 400 bis 12.000), vorzugsweise Polyetherpolyolen, gegebenenfalls unter Mitverwendung von Kettenverlängerungsmitteln der oben beschriebenen Art (Molekulargewichte bevorzugt 60 bis 399), durch (unvollständige) NCO-Prepolymerbildung mit aromatischen Di- und/oder Polyisocyanaten, bevorzugt Diisocyanaten, zugänglich sind. Es werden, wie bereits ausgeführt, nicht alle Hydroxylgruppen mit den Polyisocyanaten umgesetzt. Für die angestrebte Umsetzung eines Hydroxylgruppen-Äquivalents wird vorzugsweise 1 Mol eines Diisocyanats verwendet, so daS die Hydroxylgruppe in eine urethangebundene NCO-Gruppen aufweisende Endgruppe überführt wird: -OH + OCN-D-NCO → -OCO-NH-D-NCO (D = Rest eines Diisocyanats).

Der NCO-Gehalt der in den erfindungsgemäßen Verfahren eingesetzten NCO- sowie OH-Gruppen und gegebenenfalls NCO-inerte, endständige Gruppen besitzenden Isocyanatverbindungen a), beträgt 0,3 bis 25,9 Gew.-%, bevorzugt 0,3 bis 20 Gew.-%, besonders bevorzugt 0,5 bis 12 Gew.-% NCO.

Besonders bevorzugt sind Komponenten a), hergestellt aus Toluylendiisocyanaten oder Diphenylmethandiisocyanaten einerseits und Polyhydroxylverbindungen andererseits, mit der Maßgabe und unter Reaktionsbedingungen, daß vorzugsweise 50 bis 85, insbesondere 50 bis $66,\overline{6}$ Äquivalentprozente der Hydroxylgruppen umgesetzt werden, so daß jeweils die Hälfte der eingesetzten NCO-Gruppen rechnerisch frei bleibt und vorzugsweise 50 bis 15, insbesondere 50 bis $33,\overline{3}$ Äquivalentprozente der ursprünglich vorhandenen Hydroxylgruppen frei bleiben.

Beispielsweise wird 1 Mol Diol HO-I-OH mit 1 Mol Diisocyanat OCN-D-NCO so umgesetzt, daß 50 % der OH-Gruppen mit der (gesamten) Diisocyanatmenge reagiert haben und das Reaktionsprodukt noch 50 % OH-Gruppen aufweist:

HO-I-OH + OCN-D-NCO → HO-I-OCONH-D-NCO

(1 Mol) (1 Mol) (erfindungsgemäß zu verwendende Komponente a)

Bevorzugt werden 1 Mol Triol

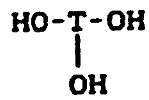

mit 2 Mol Diisocyanat so umgesetzt, daß 66,6 % der OH-Gruppen mit der (gesamten) Diisocyanatmenge reagiert haben (und 33,3 % der OH-Gruppen noch frei sind):

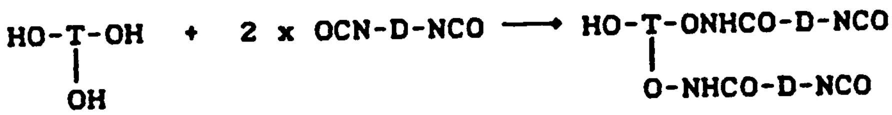

Es handelt sich bei obigen Formeln um idealisierte Formeln, doch überwiegt in der Mischung der möglichen Reaktionsprodukte diese idealisierte Formel. Damit werden relativ einheitliche Amino/Hydroxylgruppen tragende Verbindungen (nach Hydrolyse) zugänglich - im Gegensatz zu den Verfahrensprodukten des Eintopf-/Simultanverfahrens nach DE-A 3 244 913. Die NCO-Prepolymerbildung kann durch Verfolgung des NCO-Gehalts in der gewünschten Umsetzungsstufe abgebrochen werden. Bei vollständiger OH/NCO-Reaktion würden dagegen im ersteren Beispielsfall (Diol + Diisocyanat) ein hochpolymeres Polyurethan, im zweiten Fall ein NCO-Prepolymer (mit verhältnismäßig niedrigem NCO-Gehalt) und im dritten Fall (siche unten) ein OH-Prepolymer entstehen. Werden 1 Mol Triol

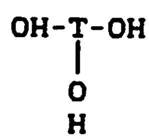

mit 1 Mol Diisocyanat so umgesetzt, daß 33 Äquivalentprozent der OH-Gruppen mit der (gesamten) Diisocyanatmenge reagiert haben, so sind 66,6 % der OH-Gruppen noch frei.

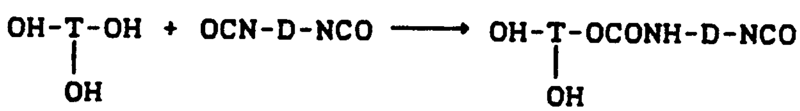

Die Polyhydroxylverbindungen, z.B. ein Triol $T(OH)_3$, können auch vor der Umsetzung mit den Di- und/oder Polyisocyanaten an ihren Hydroxylgruppen teilweise durch Überführung in NCO-inerte Gruppen, z.B. mit Monoisocyanaten R'''-NCO in eine Verbindung des Typs

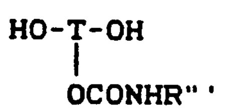

(T = trifunktioneller Rest des Triols, ohne OH-Gruppe)

überführt werden, welche dann zum NCO/OH-Prepolymeren umgesetzt wird.

Eine solche Modifizierung unter Bildung NCO-inerter Gruppen kann auch in nur geringem Maße, d.h. nur bei einem Teil der Moleküle erfolgen. Sie führt zu einer Verminderung der Funktionalität, oftmals zu einer Viskositätsminderung in den erfindungsgemäßen Amino/OH-Verbindungsgemischen, ergibt eine Art Weichmacherwirkung bzw. Modifizierung der Polymereigenschaften bei ihrer Verwendung zur Herstellung von Polyurethanharnstoffen in Polyisocyanat-Polyadditionsverfahren, insbesondere zu besserer Plastizität und weniger starrem Molekularaufbau.

Ferner sind zur Herstellung der Komponente a) aus reaktionskinetischen Gründen anstelle von Polyhydroxylverbindungen Polyhydroxyl-polyamin-Verbindungen bevorzugt, wie sie etwa durch teilweisen Ersatz der Hydroxylgruppen in Polyhydroxylverbindungen durch primäre, aliphatisch gebundenen Aminogrupen mittels sogenannter "Ammoniakverdrückung der Polyole" herstellbar sind, vorzugsweise mit der Maßgabe und unter Reaktionsbedingungen, daß alle Aminogruppen mit Diisocyanaten im NCO:$NH_2$-Verhältnis 2:1 umgesetzt werden, so daß rechnerisch die Hälfte der eingesetzten NCO-Gruppen frei bleibt und auch bevorzugt alle Hydroxylgruppen im wesentlichen nicht reagieren. Da letztere nur sehr viel langsamer als Aminogruppen zu reagieren vermögen, kann dies Ziel relativ leicht erreicht werden. Ähnliches trifft für Polyole zu, die nebeneinander schneller reagierende primäre bzw. langsamer reagierende sekundäre Hydroxylgruppen enthalten.

Die für das erfindungsgemäße Hydrolysen verfahren erforderliche Komponente a) wird durch Umsetzung der Polyisocyanate mit Hydroxyl- und gegebenenfalls Amino-Gruppen und gegebenenfalls NCO-inerten Gruppen aufweisenden Verbindungen hergestellt. Dazu werden die Polyisocyanate und die NCO-reaktiven Komponenten miteinander vereinigt und bevorzugt gerührt. Dies geschieht im allgemeinen bei einer Temperatur von 20 bis 120° C, sie kann jedoch, z.B. bei der Verwendung sehr reaktionsfähiger und vernetzungsanfälliger Aminausgangskomponenten (z.B. Aminopolyolen mit aliphatisch gebundenen primären oder sekundären Aminogruppen) auch tiefer liegen. Ein bevorzugter Temperaturbereich für Polyhydroxylverbindungen ist 25 bis 80° C, besonders bevorzugt 40 bis 70° C. Die Zeitdauer ist abhängig von den Reaktivitäten der beteiligten Reaktionspartner, der Reaktionstemperatur, dem gewünschten NCO-Gehalt, dem gewünschten Isocyanat-Monomergehalt, der An- oder Abwesenheit von Katalysatoren etc. Im allgemeinen betragen die benötigten Reaktionszeiten (bei Polyolen oder Aminopolyolen mit aromatischen Aminogruppen) 30 Minuten bis 12 Stunden, bevorzugt 1 bis 12 Stunden, besonders bevorzugt 2 bis 5 Stunden. Bei Aminopolyolen mit aliphatischen Aminogruppen können die Reaktionszeiten sehr viel kürzer sein, z.B. 1 bis 30 Minuten bei Raumtemperatur betragen.

Die entstandenen Prepolymere enthalten gleichzeitig OH- und NCO-Gruppen, sind also weiter reaktionsfähig und sollen deshalb - abhängig von ihrer Reaktivität - zügig weiterverarbeitet werden. Um die Lagerstabilität der NCO- und OH-Gruppen aufweisenden Verbindungen zu erhöhen, ist es oft ratsam, direkt nach Beendigung der Umsetzung (deren Verlauf im übrigen ständig mit geeignete Maßnahmen und Vorkehrungen, z.B. ständige NCO-Titration oder Infrarotmessungen des NCO-Gehalts, verfolgt werden sollte) Maßnahmen zu ergreifen, um die Stabilität des NCO- und OH-Gruppen aufweisenden Prepolymers zu gewährleisten. Dazu gehören z.B. Temperaturabsenkung des Prepolymers nach Reaktionsende, Verwendung der Ausgangsverbindungen mit möglichst unterschiedlich reaktiven NCO-reaktiven Gruppen (z.B. Polyether mit (reaktiveren) primären und (weniger reaktiven) sekundären Hydroxylgruppen oder Polyetheraminpolyole mit praktisch selektiv vorab reagierenden aliphatischen Aminogruppen) oder Stabilisierung der Prepolymere mit einem üblichen Mittel des Standes der Technik (Säuren, Säurechloride etc.). Trotz dieser Maßnahmen ist im Regelfall eine direkte Hydrolyse des NCO-Prepolymers zur aminischen Verbindung anzustreben.

Die NCO- und Hydroxylgruppen aufweisende Verbindung (Komponente a) wird durch Hydrolyse mit Wasser (b) in Gegenwart von Hydrolysekatalysatoren (c) und gegebenenfalls Lösungsmitteln (d) in die Amino- und Hydroxylgruppen aufweisenden Verbindungen überführt.

Zur Hydrolyse der NCO-Gruppen in primäre Aminogruppen werden, bezogen auf ein Äquivalent an NCO-Gruppen $\geq$0,75 Mol Wasser, bevorzugt 0,75 bis 50 Mol Wasser, besonders bevorzugt 1 bis 35 Mol Wasser, ganz besonders bevorzugt 1,25 bis 12 Mol Wasser, verwendet.

Die Hydrolysekatalysatoren (Komponente c) können anorganische oder organische basische Verbindungen sein und können lösliche oder unlösliche Verbindungen darstellen.

Beispielsweise kommen infrage: Hydroxide der 1., 2. und 3. Hauptgruppe und die Oxide der 1. und 2. Hauptgruppe des Periodensystems, insbesondere die Hydroxide der 1. und 2. Hauptgruppe wie Natrium- und Kaliumhydroxid, Carbonate und Hydrogencarbonate von bevorzugt Metallen der 1. Hauptgruppe wie Natrium- und Kaliumhydrogencarbonat bzw. Soda und Pottasche, ferner Carboxylate von bevorzugt einwertigen Carbonsäuren (wie Ameisen-, Essig-, Ethylhexansäure) mit Metallen der 1. und 2. Hauptgruppe des Periodensystems, insbesondere der 1. Hauptgruppe wie z.B. Kaliumacetat, -octoat, -ethylhexanoat, ferner

Carbonate, Hydrogencarbonate, Carboxylate von organischen Trialkylammoniumsalzen und Carbonate, Hydrogencarbonate, Carboxylate und Hydroxide von organischem Tetra-$C_1$-$C_{18}$-alkylammonium-Gruppen, ferner alle Salze schwacher Säuren wie Kieselsäure, Blausäure, Cyansäure, Thiocyansäure, Isocyansäure, Isothiocyansäure, Schwefelwasserstoff, die durch Hydrolyse in Wasser stark basisch reagieren, z.B. Alkali- und Erdalkalisalze. Geeignete Katalysatoren sind ferner wasserlösliche Alkalisalze, die sich von Säuren wie Ethylendiamintetraessigsäure, Nitrilotriessigsäure, Cyclohexylentetraessigsäure, Hydroxyethylethylendiaminotriessigsäure, 2-Hydroxy-1,3-diaminopropylentetraessigsäure, Diethylentriaminpentaessigsäure, Cyclamtetraessigsäure etc. ableiten oder aminopropioncarbonsaure Salze, wie sie in DE-A 2 451 013 aufgeführt sind, z.B. Morpholin-N-propionsäure-, Piperazin-N,N′-dipropionsäure-di-, N-Cyclohexyl-nitrilodipropionsäure-di-Kaliumsalze.

Ferner seien Alkalisalze von Mercaptanen, z.B. Natrium-n-butylmercaptid, Lithiumdecylmercaptid, Lithium-2-ethyl-6-hydroxyethylmercaptid, Natriumcarboxymethylmercaptid, Kaliumphenylmercaptid, 2-Aminothiophenol-Kaliumsalz, und weitere Mercaptide, wie sie in DE-A 2 314 865 aufgeführt sind, genannt.

Erfindungsgemäß können auch tertiäre Amine als basische Katalysatoren verwendet werden. Dabei werden bevorzugt tertiäre Amine aliphatischer oder cycloaliphatischer Struktur eingesetzt, wobei auch Gemische verschiedener tertiärer Amine eingesetzt werden können.

Beispiele sind z.B. meist nicht vollständig wasserlösliche Vertreter wie die Trialkylamine, z.B. Trimethylamin, Triethylamin, Tripropylamin, Triisopropylamin, Dimethyl-n-propylamin, Tri-n-butylamin, Tri-isobutylamin, Triisopentylamin, Dimethylbutylamin, Triamylamin, Dioctylhexylamin, Dodecyldimethylamin, Dimethylcyclohexylamin, Dibutylcyclohexylamin, Dicyclohexylethylamin, Tetramethyl-1,3-butandiamin, aber auch tertiäre Amine mit einer araliphatischen Gruppe wie Dimethyl-benzylamin, Diethylbenzylamin, $\alpha$-Methylbenzyldimethylamin.

Bevorzugt sind Trialkylamine mit insgesamt 6 bis 15 C-Atomen, z.B. Triethylamin bis Triamylamin bzw. Dimethylcyclohexylamin.

Gut geeignete tertiäre Amine sind neben den Trialkylaminen solche Amine, welche insbesondere in $\beta$-Stellung zur tertiären Gruppe eine weitere tertiäre Amino- oder eine Ethergruppe aufweisen. Beispiele sind Dialkylaminoalkylether oder Bis-dialkylaminoalkylether (US-PS 3 330 782, DE-B 1 030 558), z.B. Dimethyl-(2-ethoxyethyl)-amin, Diethyl-(2-methoxypropyl)-amin, Bis-(2- dimethylamino-ethyl)-ether, Bis-(2-diethylaminoethyl)-ether, Bis-(2-diethylaminoisopropyl)-ether, 1-Ethoxy-2-dimethylaminoethoxyethan, N-Methyl-morpholin, N-Ethyl-morpholin, N-Butyl-morpholin, ferner permethylierte Polyalkylendiamine wie Tetramethylethylendiamin, Tetramethyl-1,2-propylendiamin, Pentamethyldiethylentriamin, Hexamethyltriethylentetramin und höhere permethylierte Homologe (DE-A 2 624 527 und -528), ferner Diethylaminoethylpiperidin, 1,4-Diaza-(2,2,2)-bicyclooctan, N,N′-Dimethylpiperazin, N-Methyl-N′-dimethylaminoethyl-piperazin, N,N′-bis-dimethylaminoethylpiperazin, N,N′-Bis-dimethylaminopropylpiperazin und andere, in der DE-A 2 636 787 zitierte Bis-dialkylaminoalkylpiperazine, in der EP-A 54 219 zitierte N-Dialkylaminoethylmorpholine, 4-Dialkylamino- oder 4-Pyrrolidinopyridin, wie sie etwa in Angew. Chem., 90, 602 (1978) vorgestellt werden oder Dialkylaminoalkyloxazolidine gemäß DE-A 3 033 832.

Bevorzugt aus dieser Gruppe sind die wasserlöslichen Verbindungen wie Tetramethylethylendiamin, permethyliertes Diethylentriamin, N-Methylmorpholin, 2-(2-Dimethylaminoethyl)-ether sowie N-Methylpiperidin.

Weiterhin verwendbar sind: Harnstoffgruppen aufweisende tertiäre Aminoverbindungen gemäß DE-A 3 027 796, acylierte tertiäre Aminoverbindungen gemäß DE-A 2 425 448, 2 523 663 und 2 732 292, tertiäre Aminogruppen aufweisende Perhydrotriazine gemäß DE-A 2 422 335, Tetramethylguanidin, 1,3-Bis-(dialkylaminoalkyl)-guanidine gemäß EP 33 879 (DE-A 3 003 978), pentasubstituierte Guanidine gemäß CA-A 918 675, Guanidingruppen aufweisende Katalysatoren gemäß DE-A 3 018 023, Tetrahydropyrimidine gemäß DE-B 2 439 550 oder JP-B 71 02 672, substituierte cyclische und acyclische Amidine gemäß DE-A 1 950 262, cyclische Amidine gemäß DE-B 1 745 418 (US-PS 3 769 244), US-A 3 814 707, DE-A 3 041 834, cyclische Propionitrile gemäß DE-A 2 419 304.

Bevorzugt werden solche tertiären Amine eingesetzt, die ausgeprägte hydrolytische Stabilität haben, so daß sie unverändert zurückgewonnen werden können, die wasserlöslich sind und/oder unter 200° C bei Normaldruck sieden. Hydrolytische Stabilität und/oder Wasserlöslichkeit werden oft verbessert, wenn man die aminischen Verbindungen in Salzform vorliegen hat. Im erfindungsgemäßen Verfahren können ebenfalls die Salze dieser Amine mit schwachen Säuren, wie z.B. Kohlensäure, soweit diese Kohlensäuresalze stabil sind, oder Ölsäure oder Ricinolsäure, eingesetzt werden. Weitere tertiäre Amine, die im erfindungsgemäßen Verfahren einsetzbar sind, stellen tertiäre Aminstickstoffatome aufweisende Azakronenether und Cryptanden dar, jedoch sind sie wegen ihres hohen Preises nicht bevorzugt.

Zusätzlich zu diesen Katalysatoren, die hier im Text auch kurz als Basen bezeichnet sind, können Katalysatoren mitverwendet werden, die als Metallverbindungen Lewis-Säuren darstellen und die als in der

Polyurethanchemie verwendete Urethanisierungskatalysatoren bekannt sind. Dabei handelt es sich vor allem und die an und für sich bekannten Blei-, Zink- und Zinnverbindungen, insbesondere Zinnverbindungen und ganz besonders Zinnverbindungen, die hydrolytische Stabilität aufweisen, wie Zinnkatalysatoren der Art nach EP-A 45 090, DE-A 2 657 413, 2 547 526 und 2 722 658.

Weitere, im erfindungsgemäßen Verfahren einsetzbare, katalytisch wirksame Verbindungen werden in der DE-B 2 759 398, Kolonne 6, Zeile 52 bis Kolonne 7, Zeile 54 und im Kunststoff-Handbuch, Band VII, herausgegeben von Vieweg und Höchtlen, Carl-Hanser-Verlag, München 1966, z.B. auf den Seiten 96-102 beschrieben.

Es können auch unlösliche Katalysatoren, z.B. vom Zeolithoder Bentonit-Typ, verwendet werden, wie sie in der EP-A 99 537 (US-A 4 525 534) verwendet werden.

Bei den Hydrolyseverfahren werden als Lösungsmittel d), die mindestens zum Teil wassermischbar sein sollen, z.B. folgende Lösungsmittelklassen eingesetzt:
wasserlösliche, aliphatische oder cycloaliphatlsche Säureamide mit 1 bis 10 Kohlenstoffatomen, z.B. Dimethylformamid (DMF), Diethylformamid, N-Methylpyrrolidon, Dimethylacetamid, Caprolactam, Formamid. Bevorzugt sind Dimethylformamid, Dimethylacetamid und N-Methylpyrrolidon, insbesondere DMF.

Wasserlösliche Ether des Ethylenglykols wie Ethylenglykoldimethylether oder Ethylenglykoldiethylether, des Diethylenglykols wie Diethylenglykoldimethylether oder Diethylenglykolmonomethylmonobutylether, des Triethylenglykols wie Triethylenglykoldimethylether oder des Propylenglykols, ferner die cyclischen Ether wie Tetrahydrofuran, alkylsubstituierte Tetrahydrofurane wie 2,5-Dimethyltetrahydrofuran oder Dioxane wie 1,4-Dioxan,
wasserlösliche, tetraalkylierte aliphatische Harnstoffe oder gegebenenfalls auch Thioharnstoffe mit 4 bis 12 C-Atomen, z.B. Tetramethylharnstoffe oder Tetraethylharnstoff,
wasserlösliche, aliphatische oder cycloaliphatische Sulfone oder Sulfoxide mit 2 bis 10 Kohlenstoffatomen, z.B. Tetramethylensulfon oder Dimethylsulfoxid,
wasserlösliche, aliphatische oder cycloaliphatische Phosphorsäureamide, z.B. Hexamethylphosphorsäuretriamid,
Acetonitril, teilweise wasserlösliches Propionitril,
wasserlösliche Ketone wie Aceton und teilweise wasserlösliche Ketone wie Methylethylketon.

Die Lösungsmittel können auch in beliebigen Mischungsverhältnissen zueinander eingesetzt werden. Unter den genannten Lösungsmitteln werden solche bevorzugt, welche bei Normaldruck zwischen 56 und 250° C, vorzugsweise 64 bis 165° C, sieden, da sich hierbei die Aufarbeitung vereinfacht.

Bevorzugte wassermischbare Lösungsmittel sind Dimethylformamid, Dimethylacetamid, Acetonitril, Aceton, Methylethylketon und 1,4-Dioxan. Besonders bevorzugt ist DMF.

Weniger bevorzugt ist die Mitverwendung von gegenüber Isocyanaten reaktive Gruppen aufweisenden Lösungsmitteln. Es sind dies u.a. Alkohole wie i-Propanol, t-Butanol oder Ethylglykol.

Gleichfalls weniger bevorzugt sind als Co-Lösungsmittel zusätzlich zu den zumeist wasserlöslichen Lösungsmitteln die im wesentlichen wasserunlöslichen Solventien wie chlorierte und/oder fluorierte aliphatische Kohlenwasserstoffe wie Di-, Tri- und Tetrachlormethan, Trichlorfluormethan, Trichlorethan, aliphatische oder aromatische Kohlenwasserstoffe wie Hexan, Heptan oder Kohlenwasserstoffgemische der Petrolether- oder Benzinreihe, Benzol, Toluol, Xylole und höheralkylierte aromatische Verbindungen, halogenierte oder nitrierte aormatische Verbindungen wie z.B. Chlorbenzol oder Nitrobenzol.

Das Lösungsmittel als Komponente d) soll bevorzugt zu 60 bis 100 % aus Lösungsmitteln bestehen, die zumindest teilweise, bevorzugt gänzlich, wassermischbar sind und cyclische oder acyclische Amid-, Ether-, Harnstoff-, Sulfoxid-, Sulfon-, Phosphorsäureamid-, Nitril- und Ketogruppen aufweisen? Komponente k) kann dann bis zu 40 % aus Lösungsmitteln bestehen, wie sie als weniger geeignet beschrieben wurden.

Im Hydrolyseverfahren kann das Reaktionsgemisch (bevorzugt) homogen einphasig sein oder auch eine Dispersion oder eine Emulsion darstellen. Im allgemeinen kann es aber für eine vereinfachte Aufarbeitung günstig sein, am Ende der Reaktion zwei Phasen zu haben, die in einfacher Form mechanisch getrennt werden.

Die hydrolytische Umwandlung des NCO- und OH- und gegebenenfalls NCO-inerte Gruppen aufweisenden Ausgangsmaterials a) in das $NH_2$- und OH-Gruppen und gegebenenfalls NCO-inerte Gruppen enthaltende Endprodukt kann in den erfindungsgemäßen Verfahren nach verschiedenen, zur Hydrolyse von NCO-Verbindungen im Prinzip bekannten Ausführungsformen erfolgen.

Methode A: katalysierte Carbamatbildung und Gewinnung des Amins mittels überschüssiger Säure
Methode B: katalysierte Carbamatbildung und Gewinnung des Amins mittels äquivalenter Säure
Methode C: katalysierte Carbamatbildung und Gewinnung des Amins mittels
a) thermischer Behandlung der Reaktionsmischung und

b) Extraktion mit einem Lösungsmittel

Methode D: katalysierte Hydrolyse von NCO-Verbindungen zu $NH_2$-Verbindungen in Gegenwart von polaren, bevorzugt Amid-haltigen, Lösungsmitteln.

Alle Methoden beinhalten die hydrolytische Umwandlung von NCO- in $NH_2$-Gruppen, wobei bei der Methode A, B oder C gegebenenfalls eine Zwischenstufe (Carbamat) erfaßt werden kann, nicht jedoch bei Methode D. Alle Methoden stellen spezielle, beispielhafte Ausformungen des besagten allgemeinen Verfahrens dar.

Methode A:

Carbamatbildung und Gewinnung des Amins mittels überschüssiger Säure (vgl. DE-B 2 948 419 / DE-B 3 161 249 / DE-A 3 129 978)

Dieses Verfahren wird so durchgeführt, daß man

α) in einem ersten Schritt ein Urethan- und/oder Harnstoffgruppen aufweisendes NCO/OH-Prepolymer a) bei einer Temperatur von 0 bis 40 °C durch Eintragen in eine wäßrige Alkalihydroxidlösung, Erdalkalihydroxidlösung oder -Suspension oder sonstige basische Katalysatoren, in das entsprechende Carbamat überführt, wobei das Äquivalentverhältnis zwischen Hydroxid-Ionen und NCO-Gruppen gleich oder größer als 1:1 ist,

β) das Carbamat in einem zweiten Schritt durch Zusatz einer (überschüssigen) Menge eines sauren Ionenaustauschers oder einer starken Säure unter Abspaltung von Kohlendioxid in das freie Amin überführt,

γ) die gegebenenfalls überschüssige Mineralsäure durch Basenzusatz neutralisiert,

δ) das so erhaltene Polyamin aus dem Reaktions-Produkt auf an sich bekannte Weise abtrennt.

Als saure Ionenaustauscher sind im erf indungsgemäßen Verfahren alle Stoffe geeignet, die in einem polymeren unlöslichen Grundgerüst bewegliche acide Wasserstoffatome besitzen.

Besonders geeignet als polymere Säuren sind im erfindungsgemäßen Verfahren Ionenaustauscherharze, die als polymere Basis ein Styrol/Divinylbenzol-Skelett besitzen, an das Sulfonsäure-Gruppen als saure Funktionen angeheftet sind.

In diesem Verfahren wird das Prepolymer zunächst in der Regel in einem mit Wasser mischbaren, inerten Lösungsmittel gelöst. Geeignete Solventien sind z.B. Aceton, Tetrahydrofuran oder Dioxan. Dabei können auf 100 Teile Lösungsmittel z.B. 1 bis 400 Teile des Prepolymeren verwendet werden. Das Prepolymer wird zweckmäßig unter Rühren langsam (vorzugsweise binnen 30 bis 120 Minuten) in eine auf ca. 0 bis 40° C temperierte Lösung von Alkali- oder Erdalkalihydroxid in Wasser eingetragen, wobei die (Erd)Alkalikonzentration vorzugsweise 1 Gew.-Teile Base auf 5 bis 20 Gew.-Teile Wasser beträgt. Gleichfalls geeignet sind anorganische und organische Ammoniumhydroxide (z.B. Tetraalkylammoniumhydroxid), bevorzugt sind NaOH und KOH.

Wird ohne Solvens gearbeitet, so wird das möglichst niedrigviskose (bevorzugt bis ca. 5.000 mPas), gegebenenfalls vorher erwärmte (z.B. 30 bis 90° C) NCO-Prepolymer bei hoher Rührgeschwindigkeit möglichst fein verteilt zugegeben (z.B. Einspritzung durch eine Düse) und zur Rührerleichterung die vorgelegte Wassermenge gegebenenfalls erhöht (z.B. um den Faktor 1,1 bis 100).

Die (Erd)Alkalihydroxidmenge wird vorzugsweise so bemessen, daß nach vollständiger Reaktion zumindest noch eine geringe Menge freier Base verbleibt, ein NCO/OH-Ionen-Verhältnis von 1:1,01 bis 1:1,30 und die Verwendung von Alkalihydroxiden wird dabei bevorzugt. Die Restbasenkonzentration darf nicht zu hoch sein, da sonst nach der Bildung des Carbamats im Prepolymer enthaltende Urethangruppierungen gleichfalls hydrolysiert werden. Um die Homogenität der Lösungen zu verbessern, wird vorzugsweise ein handelsüblicher Emulgator in Mengen von 0,1 bis 1 Gew.-Teilen (bezogen auf 100 Teile Reaktionsgemisch) zugesetzt. Intensives Rühren ist bei der Vermischung der NCO-Komponente mit der Hydroxidkomponente zu empfehlen. Nach der Beendigung der Zugabe des Prepolymeren wird vorzugsweise noch ca. 15 bis 180 Minuten bei 0 bis 20° C weitergerührt.

Ansäuerung mit Ionenaustauscherharzen (vgl. US-A 4 525 590)

Im zweiten Schritt wird die Carbamat-Lösung bzw. Carbamat-Suspension mit dem Ionenaustauscher in dem Maße miteinander vereinigt, wie es die Heftigkeit der Gasentwicklung und die Dimensionierung der Apparatur zuläßt (10 bis 300 Minuten).

Die einfache Aufarbeitung gestaltet sich im Falle der Verwendung von Ionenaustauscherharzen wie folgt:

Ist die Polyaminohydroxylverbindung löslich, so wird abfiltriert und die aminische Lösung vom Lösungsmittel durch Destillation befreit.

Ist die Polyaminohydroxylverbindung schwerlöslich, so wird ein geeignetes Solvens bis zur Lösung des Amins zugegeben und wie oben verfahren.

Ist die Polyaminohydroxylverbindung unlöslich, so wird vom flüssigen Medium abfiltriert, der Rückstand mit einem geeigneten Solvens bis zur Lösung des Amins behandelt und wie oben verfahren.

Geeignete Solventien sind aprotisch-dipolare wassermischbare Lösungsmittel wie N-Methylpyrrolidon, Dimethylformamid oder Dimethylsulfoxid.

Alle so erhaltenen Polyaminohydroxylverbindungen werden bei 0,01 bis 0,1 Torr/60 bis 100° C von Spuren flüchtiger Bestandteile befreit.

Geeignete saure Ionenaustauscher sind z.B. Lewatit® SC 108, S 100, SP 112, SP 120 oder Lewasorb® A 10 der Bayer AG.

Ansäuern mit Mineralsäuren:

Nach Beendigung der Zugabe des Prepolymeren wird vorzugsweise noch ca. 15 bis 180 Minuten bei 0 bis 20° C weitergerührt. Danach wird konzentrierte Mineralsäure (z.B. Schwefel- oder Phosphorsäure, bevorzugt HCl) unter starkem Rühren und Kühlen in dem Maße zugegeben, wie es die Heftigkeit der $CO_2$-Entwicklung zuläßt. Das Säure/Basen-Äquivalentverhältnis beträgt bevorzugt ca. 1,2:1 bis 2,5:1, insbesondere 1,5:1 bis 2,0:1, so daß das Reaktionsprodukt schwach sauer ist (pH bevorzugt <6, insbesondere ca. 5,5 bis 1). Die überschüssige Mineralsäure wird durch Basenzusatz (bevorzugt mit Alkalihydroxid) neutralisiert.

Zur weiteren Aufarbeitung kann z.B. wie folgt vorgegangen werden:
Bilden sich (bei kurzkettigen und hydrophoben Polyaminen) zwei Phasen aus, nämlich eine Polyaminohydroxylverbindung/Lösungsmittel und eine Lösungsmittel/Salz/Wasser-Phase, so wird die wäßrige Phase mittels eines Scheidetrichters abgetrennt und verworfen oder gegebenenfalls z.B. mit 250 ml $CH_2Cl_2$ auf 1 l wäßrige Lösung ausgeschüttelt.

Bilden sich keine zwei Phasen, kann wie folgt vorgegangen werden:
Auf 1 l des Reaktionsgemisches werden z.B. 500 ml Dichlormethan gegeben und in einem Scheidetrichter gut geschüttelt. Nach dem Absetzenlassen der beiden Phasen wird die außer der Polyaminohydroxylverbindung noch Lösungsmittel enthaltende Lösung abgetrennt. Durch Abdestillation aller flüchtigen Anteile wird eine lösungsmittelfreie Polyaminohydroxylverbindung erhalten.

Es kann auch das gesamte Reaktionsgemisch bei 13 bis 26 mbar/40 bis 60° C Badtemperatur von flüchtigen Bestandteilen befreit werden. Der so erhaltene, noch Alkalisalze enthaltende, ölige Rückstand wird in organischen Solventien wie z.B. $CH_2Cl_2$, Methanol, Ethanol oder Dioxan aufgenommen und durch Filtration (Papierfilter, Drucknutsche) vom ungelösten Salz abgetrennt.

Bei auf bei Raumtemperatur harzartigen NCO-Prepolymeren beruhenden Polyaminohydroxylverbindungen kann auch so vorgegangen werden, daß der Aminopolyether mit gesättigter Kochsalzlösung aus der Reaktionsmischung ausgefällt wird; das Polyamin wird durch Dekantierung isoliert, getrocknet, wieder in organischen Solventien gelöst, von unlöslichen Salzanteilen abfiltriert und das Lösungsmittel abdestilliert.

Methode B:

Carbamatbildung und Gewinnung des Amins mittels äquivalenter Säure (entsprechend US-A 4 525 590)

Dieses Verfahren wird so durchgeführt, daß man
in einem ersten Schritt ein Urethan- und/oder Harnstoffgruppen sowie Hydroxylgruppen und gegebenenfalls NCO-inerte Gruppen aufweisendes NCO-Prepolymer bei einer Temperatur von 0 bis 40° C durch Eintragen in eine wäßrige Basenlösung (bevorzugt Alkalihydroxidlösung) oder durch kontinuierliche Vermischung in das entsprechende Carbamat überführt und
in einem zweiten Schritt durch Vereinigung mit einer der Base äquivalenten Menge einer starken Säure direkt in das freie Amin und die Base in das entsprechende Säuresalz überführt und
das freie Amin in an sich bekannter Weise isoliert.

Wird das NCO-Voraddukt in Form einer Lösung in einem NCO-inerten Lösungsmittel eingesetzt, so können z.B. auf 100 Teile Lösungsmittel 1 bis 400 Teile NCO-Voraddukt verwendet werden.

Die NCO-Gruppen aufweisenden Verbindungen als auch ihre Lösungen werden bevorzugt bei 45 bis 70° C temperiert, um ihre Reaktionsgeschwindigkeit zu erhöhen und ihre feine Verteilung in der vorgelegten Basenlösung zu erhöhen.

Die Basenmenge beträgt im allgemeinen zwischen 0,3 und 2,0 Äquivalente pro NCO-Gruppe. Sie kann natürlich auch u.U. wesentlich höher liegen, was aus praktischen Gründen jedoch nicht sinnvoll ist. Die Basenmenge wird bevorzugt so bemessen, daß nach vollständiger Reaktion noch freie Base verbleibt; werden Hydroxidionen besitzende Basen wie z.B. die Alkalihydroxide verwendet, so wird ein $NCO/OH^{\ominus}$-Verhältnis 1:1,01 bis 1:2, bevorzugt 1:1,2 bis 1:1,8, besonders bevorzugt 1:1,4 bis 1:1,6 Mol verwendet.

Es ist jedoch auch möglich, eine gegenüber der Menge an NCO-Gruppen unterstöchiometrische Menge an $OH^{\ominus}$-Ionen einzusetzen. Man erhält dann über Harnstoffgruppen vorverlängerte Produkte, was bei gewissen Anwendungszwecken vorteilhaft ist. Ein $OH^{\ominus}$/NCO-Verhältnis von ≧0,3:1 kann so verwendet werden.

Verwendet man tertiäre Aminogruppen aufweisende Verbindungen, so wird bevorugt ein Verhältnis von NCO-Gruppen zu tertiären Amingruppen von 1:1,01 bis 1:1,5, bevorzugt 1,1:1,3, verwendet, jedoch kann auch hier mehr Amin verwendet werden.

Um die Homogenität der Reaktionsmischung zu verbessern, wird vorzugsweise ein handelsüblicher Emulgator in Mengen von 0,05 bis 1 Gew.-Teil, bevorzugt ca. 0,1 bis 0,5 Gew.-Teil (bezogen auf 100 Teile Reaktionsgemisch) zugegeben.

Nach Beendigung der Zugabe des NCO-Voraddukts wird vorzugsweise noch ca. 15 bis 180 Minuten bei 10 bis 25° C weitergerührt. Danach wird die Carbamatreaktionsmischung mit Säure behandelt. Diese Säurebehandlung kann nach 2 verschiedenen Methoden vorgenommen werden:
Die Carbamatreaktionsmischung wird zugetropft, die Säurekomponente vorgelegt.

Als Säuren kommen starke Säuren zur Anwendung, z.B., gegebenenfalls wäßrige, Mineralsäuren wie Salzsäure, Schwefelsäure, verdünnte Salpetersäure, Phosphorsäure, möglich ist auch die Verwendung von starken organischen Säuren wie Oxalsäure, Ameisensäure oder Essigsäure, oder ähnlich starken organischen Säuren mit mindestens solcher Säurestärke, wie sie Essigsäure aufweist. Bevorzugt werden Salzsäure und Schwefelsäure verwendet, besonders bevorzugt ist Schwefelsäure. Die vorgelegte Säure hat zweckmäßigerweise eine Temperatur von 0 bis 20° C. Die Zeitdauer der Carbamatzugabe ist abhängig von der Heftigkeit der sofort einsetzenden Gasentwicklung.

Das Säure/Basen-Äquivalentverhältnis beträgt etwa 1:1, d.h. pro val $OH^{\ominus}$-Ion bzw. pro val einer ein $H^{\oplus}$ abstrahierenden, tertiäre Aminogruppen aufweisenden Verbindung wird 1 val Protonen eingesetzt (etwa äquivalente Mengen). Das Reaktionsgemisch ist dann neutral bis basisch, wie es dem pH-Wert eines Gemisches aus Alkalisalzen bzw. Aminsalzen mit einer aromatischen bzw. aliphatischen Aminoverbindung entspricht. 5 bis 30 Minuten wird bei 20° C weitergerührt.

In der bevorzugten Verfahrensvariante (II) werden die Carbamatkomponente und die Säurekomponente getrennt einem gemeinsamen Reaktionsraum zudosiert. Bevorzugt wird dabei so verfahren, daß in gleichen Zeiträumen gleiche Äquivalent-Mengen an $OH^{\ominus}$-Ionen oder an tert.-Aminogruppen und Protonen den Reaktionsraum erreichen, so daß Ungleichgewichte zwischen beiden Reaktionskomponenten vermieden werden.

Bei beiden Verfahrensvarianten lassen sich als starke Säure saure Ionenaustauscherharze verwenden, wie sie bei Verfahren (A) eingesetzt wurden.

<u>Methode C:</u> (vgl. DE-B 3 266 392 / US-A 4 540 720)

Carbamatbildung und Gewinnung des Amins mittels thermischer Behandlung der ?Reaktionsmischung oder Extraktion mit einem Lösungsmittel

Dieses bevorzugte Verfahren ist dadurch gekennzeichnet, daß man

I) Die Komponente a), gegebenenfalls gelöst in einem NCO-inerten Lösungsmittel, durch Vermischen mit einer Base und Wasser in eine Carbamatgruppen aufweisende Verbindungen enthaltendes Reaktionsgemisch überführt und

II) zwecks Gewinnung der Polyaminohydroxylverbindung aus der Carbamatgruppen aufweisenden Verbindungen enthaltenden Reaktionsmischung diese entweder unter Zerlegung der Carbamatgruppen in der Reaktionsmischung
thermisch behandelt und die Polyaminohydroxylverbindung abtrennt
oder
mit einem Losungsmittel extrahiert.

Werden die NCO-Verbindungen in gelöster Form eingesetzt, so beträgt die bevorzugte Temperatur 20 bis 40°C, höchstens jedoch die dem Siedepunkt des betreffenden Lösungsmittels entsprechende Temperatur.

Werden die NCO-Verbindungen als Lösungen verwendet, so können z.B. auf 100 Teile Lösungsmittel 10 bis 1.000 Teile NCO-Prepolymer eingesetzt werden.

Die Vermischung von NCO-Verbindungen und dem basischen Medium soll vorzugsweise zu einer möglichst niedrigen Temperatur der vermischten Reaktionslösung führen, um Nebenreaktionen möglichst auszuschließen. Die Temperatur in der Reaktionsmischung der Komponenten sollte möglichst unter 100° C, besser unterhalb von 70° C, vorzugsweise jedoch unterhalb von 40° C, liegen.

Es wird daher vorzugsweise die Temperatur des basischen, niederviskosen Mediums bereits vor der Umsetzung möglichst tief gewählt, z.B. -25° C bis +40° C, bevorzugt 0° C bis 25° C. Zusätzlich kann während der Reaktion weiter gekühlt werden, um die Reaktionstemperatur möglichst im optimalen Bereich zu halten. Die zulässigen Reaktionstemperaturen hängen jedoch auch von der Art der Vermischung und Reaktionsführung ab.

Üblicherweise beträgt das Verhältnis der vorgelegten und einzuführenden Flüssigkeitsvolumina etwa 1:1 bis 1:3, dies gilt natürlich nicht, wenn, was möglich, aber nicht bevorzugt ist, feste NCO-Prepolymere in fester, möglichst feindisperser Form zugegeben werden.

In einer kontinuierlichen Ausführungsform, die für eine großtechnische Produktion besonders geeignet ist, werden NCO-Verbindungen (gegebenenfalls als Lösung) und die wäßrige Base getrennt einem gemeinsamen Reaktionsraum zudosiert, z.B. mittels eines Durchflußmischers intensiv vermischt und so zur Reaktion gebracht und aus dem Mischraum schnell ausgetragen. Die Dosierung der Komponenten kann z.B. über graduierte Tropftrichter oder mittels einer Kolben- und/oder Membran-Dosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteile davon) mit einer geeigneten, gegebenenfalls maschinell betriebenen Vorrichtung zu vermischen, zur Reaktion zu bringen und aus dem Reaktionsraum auszutragen.

Geeignete Geräte sind ausführlich in der DE-B 3 266 392 beschrieben.

Im allgemeinen werden die Reaktionskomponenten bei etwa -25° C bis +40° C dem Durchflußmischer zugeführt. Infolge der Scherkräfte beim Einsatz eines bevorzugt eingesetzten dynamischen Mischers und in Abhängigkeit von der entstehenden Reaktionswärme steigen die Reaktionstemperaturen auf ca. 50 bis 150° C an. Im allgemeinen ist es jedoch zweckmäßig, die Temperatur (gegebenenfalls durch Kühlung des Mischaggregats) unter 100° C zu halten.

Werden weitere Co-Lösungsmittel verwendet, so wird zweckmäßigerweise die Temperatur unter deren Siedepunkt gehalten, wenn er niedriger als der von Wasser ist.

Zur Erleichterung der Reaktion der Isocyanatgruppen mit der wäßrigen Base können verschiedene Zusätze verwendet werden. So können zum Homogenisieren ein oder mehrere handelsübliche Emulgatoren zugesetzt werden, z.B. in Mengen von 0,01 bis 1 Gew.-Teil auf 100 Teile Reaktionsmischung.

Weiterhin ist es möglich, zur Erhöhung der Reaktionsgeschwindigkeit katalytisch wirkende Verbindungen zuzugeben.

Solche katalytisch wirkende Verbindungen sind z.B. tertiäre Aminogruppen aufweisende Verbindungen, wie sie in der PU-Chemie allgemein bekannt sind und bei der Herstellung von Polyurethanschaumstoff zur Beschleunigung der NCO-Wasser-Reaktion eingesetzt werden.

Die durch das Vermischen der NCO-Verbindungen mit dem basischen Medium erhaltenen, Carbamatgruppen enthaltenden Verbindungen werden erfindungsgemäß direkt in Aminogruppen enthaltende Verbindungen dadurch umgewandelt, daß die Carbamatgruppen aufweisende Verbindungen enthaltende Reaktionsmischung zur Gewinnung des Amins entweder thermisch behandelt oder mit einem Lösungsmittel extrahiert wird (kontinuierlich oder diskontinuierlich durchgeführt).

Es ist möglich und auch bevorzugt, die Wärmebehandlung der Carbamatzerlegung unter Bedingungen durchzuführen, bei denen Wasser und etwaige weitere Lösungsmittel abdestillieren. Das carbamathaltige Reaktionsgemisch wird etwa 30 bis 480 Minuten mit einer Wärmequelle auf größer ≧40° C, bevorzugt größer als ≧60° C und besonders größer ≧80° C erhitzt, so daß das Lösungsmittel während der thermischen Behandlung abdestilliert. Diese gleichzeitige Wärmebehandlung und Destillation kann gegebenenfalls auch unter vermindertem Druck, z.B. bei 200 bis 950 mbar, vorgenommen werden. Dabei kann so verfahren werden, daß die Druckminderung allmählich und kontinuierlich erfolgt. So kann die Destillation bei Normaldruck begonnen und bei etwa 0,5 mbar beendet werden.

Eine kontinuierliche Verfahrensweise ist mit vorgenannten Behandlungsmethoden und Modifikationen, wie sie im Stand der Technik beschrieben sind, durchführbar. Vorzugsweise erfolgt eine kontinuierliche Gewinnung der Polyaminohydroxylverbindung durch thermische Behandlung des Carbamatgruppen aufweisende Verbindungen enthaltenden Reaktionsgemischs im Anschluß an eine kontinuierlich vorgenommene Herstellung des besagten Reaktionsgemisches.

Die Carbamatgruppen aufweisenden Verbindungen lassen sich auch durch Behandlung des Carbamatgruppen aufweisende Verbindungen enthaltenden Reaktionsgemisches mit einem geeigneten Lösungsmittel in die entsprechenen Aminogruppen aufweisenden Verbindungen (Polyhydroxyamine der Erfindung) umwandeln.

Für diese Verfahrensmethodik geeignete, mit Wasser nicht mischbare organische Lösungsmittel sind besonders solche Lösungsmittel, welche Nichtlöser für die Carbamatgruppen enthaltenden Verbindungen, sowie für die entstehenden kohlensauren Salze sind und andererseits gute Lösemittel für die entstehenden Amine darstellen. Solche Lösungsmittel sind z.B. Dichlormethan, Trichlormethan, Tetrachlormethan, Cyclohexan, Methylcyclohexan, Pentan, Hexan, Benzol und Toluol. Besonders geeignet ist Dichlormethan.

Im Prinzip verwendbar sind jedoch auch wassermischbare Lösungsmittel, wenn sie zumindest schlechtere Lösemittel für Salze der Kohlensäure sind als Wasser. Solche Lösemittel sind etwa Methanol, Ethanol, n-Propanol, i-Propanol, n-Butanol, i-Amylalkohol, cyclische Ether wie Dioxan oder Tetrahydrofuran, wasserlösliche acyclische Ether wie Diethylenglykoldimethylether oder Ketone wie Aceton, Methylethylketon und andere. Auch hier wird nach Umwandlung der Carbamatgruppen enthaltenden Verbindung in ein Polyamin ein Zweiphasensystem erhalten. Dabei ist in der wäßrigen Phase das Kohlensäuresalz und in der organischen Phase das Amin angereichert; wegen der gegenseitigen Mischbarkeit befinden sich jedoch in der wäßrigen Phase Anteile des organischen Lösungsmittels und des Amins, während die organische Phase anteilsmäßig Salze und Wasser enthält, so daß die organische Phase nach Abdestillieren des Lösungsmittels noch einmal filtriert werden muß.

Die Extraktion kann bei Normaldruck, bei vermindertem bzw. bei Überdruck vorgenommen werden, bevorzugt ist das Arbeiten bei Normaldruck.

Auch das Extraktionsverfahren kann dadurch modifiziert werden, daß vor oder während der Extraktion die Carbamatgruppen aufweisenden Verbindungen enthaltende Reaktionsmischung mit unterschüssigen Äquivalenten an Säuren, bezogen auf die eingesetzte Basenmenge, d.h. etwa 0,01 bis 0,99 Äquivalente Säure pro 1 Äquivalent an Basen, vermischt werden. Besonders geeignet ist diese Modifizierung immer dann, ebenso wie die Einleitung von Kohlendioxid, wenn ein $OH^{\ominus}$/NCO-Verhältnis von größer 1:1 Verwendung gefunden hat.

<u>Methode D:</u> (besonders bevorzugt)

Katalysierte Hydrolyse von NCO-Verbindungen zu $NH_2$-Verbindungen in Gegenwart von Lösungsmitteln, gegebenenfalls sehr geringen Mengen an Katalysatoren (vgl. DE-A 3 223 395, DE-A 3 223 400, DE-A 3 223 398, DE-A 3 223 397, DE-A 3 223 396, DE-A 3 244 912).

Diese Verfahren werden beispielsweise so durchgeführt, daß man in einem einstuf igen Verfahren die NCO-Gruppen von
NCO-Gruppen und OH-Gruppen und gegebenenfalls inerten-Gruppen aufweisenden Verbindungen (Komponente a)
mit Wasser (b), gegebenenfalls in Gegenwart von
basisch wirkenden Verbindungen als Katalysatoren (c),
in Gegenwart von mindestens z.T. wassermischbaren, polaren Lösungsmitteln k) mit Carbonsäuredialkylamid-, Lactam-, Tetraalkylharnstoff-, Sulfon-, Sulfoxid-, Phosphorsäuredialkylamid-, Nitril-, Ether und Ketongruppen
mit einem Siedebereich von 56 bis 250° C und einer Dielektrizitätskonstante von mindestens 10 in Mengen von mindestens 5 Teilen, bezogen auf 100 Teile g)
unter Aufrechterhaltung einer im wesentlichen homogenen Reaktionsmischung bei einer Temperatur zwischen 20 und 210° C, bevorzugt 40 bis 150° C, hydrolysiert.

Bevorzugt wird bei diesem Verfahren so verfahren, daß als basische Verbindungen, bezogen auf 100 Gew.-Teile Komponente g)
0,0001 bis 10 Gew.-Teile tert. Amin-Verbindungen, Amidine und andere stark basische Amin-Verbindungen
und/oder
0,0001 bis 10 Gew.-Teile Alkalihydroxide, Erdalkalihydroxide, Tetraalkylammoniumhydroxide, Alkalisilikate, Alkalialuminate, Phenolate, Thiophenolate, Mercaptide, Hydrogensulfide der Alkalimetalle, lösliche Alkali- und Erdalkali-Salze der (Iso) (Thio)cyansäure, $\beta$-Diketonenolate
und/oder
0,0001 bis 10 Teile Carbonate und Hydrogencarbonate von Alkalimetallen,
und/oder
0,0001 bis 10 Teile Alkali- und Erdalkalimetallsalze von organischen Carbonsäuren, Hydroxycarbonsäuren und/oder Aminocarbonsäuren,

und als Lösungsmittelkomponente Carbonsäuredialkylamid- und Lactamlösungsmittel, Aceton oder Acetonitril in Mengen von ≧10 Gew.-Teilen, bezogen auf 100 Gew.-Teile Komponente a) und ≧0,75 Äquivalent Wasser pro Äquivalente NCO-Gruppen in Komponente g) eingesetzt werden.

Zur vollständigen Konversion der NCO-Gruppen in $NH_2$-Gruppen muß mindestens 0,75 Mol Wasser pro Äquivalent NCO verwendet werden. Wird weniger als 0,5 Mol Wasser verwendet, so tritt Vorverlängerung unter Harnstoffbildung auf.

Andererseits hat sich überraschenderweise herausgestellt, daß die Verwendung eines sehr großen Überschusses an Wasser gleichfalls zu einer Vorverlängerungsreaktion führt. Dies gilt auch dann, wenn das Reaktionsgemisch einphasig ist. Es hat sich herausgestellt, daß die optimale Menge Wasser u.a. an der mitverwendeten Menge Lösungsmittel orientiert werden muß, nicht nur an der Menge an umzuwandelnden NCO-Gruppen.

Bevorzugt werden auf 1 Äquivalent an NCO-Gruppen also ≧0,75 Mol Wasser, bevorzugt 0,75 bis 50 Mol Wasser, besonders bevorzugt 1 bis 35 Mol Wasser, ganz besonders bevorzugt 1,25 bis 12 Mol Wasser verwendet. Bezogen auf 1.000 g Lösungsmittel, insbesondere DMF wird Wasser in Mengen von ≧1 g, bevorzugt ≧5 g, besonders bevorzugt 10 bis 500 g, ganz besonders bevorzugt 20 bis 300 g verwendet, wobei jedoch Wasser mindestens in der Menge verwendet wird, daß pro Äquivalent NCO-Gruppe ≧0,75, bevorzugt ≧1 Mol Wasser verwendet werden müssen. Bei Beachtung der notwendigen abs. Wassermenge und des günstigsten Solvens/Wasser-Verhältnises ergibt sich die Solvensmenge so, daß ≧10 Teile, bevorzugt ≧100 Teile und besonders bevorzugt bis 1.000 Teile Solvens auf 100 Teile der NCO-Komponente g) eingesetzt werden. Es hat sich dabei gezeigt, daß die zur Erzielung vollständiger NCO/$NH_2$-Umwandlungen notwendige minimale Solvensmenge von der Reaktionstemperatur abhängig ist. Je höher die Reaktionstemperatur ist, desto geringer kann die Lösungsmittelmenge gehalten werden. Die notwendige Wassermenge bleibt hiervon weitgehend unberührt.

Gegebenenfalls müssen zur Ermittlung des optimalen Verhältnisses von NCO-Äquivalenten, Wasser und Solvens innerhalb des angegebenen allgemeinen Rahmens einige einfache Vorversuche durchgeführt werden.

Als Katalysatoren werden solche Verbindungen angesehen, die in der Lage sind, die Produkt-NH-Zahl der Amine, so wie sie ohne Verwendung von Katalysatoren erhalten wird, anzuheben.

Die verwendeten Katalysatoren können fest oder flüssig sein, müssen jedoch im Reaktionsgemisch eine ausreichende, bevorzugt vollständige Löslichkeit besitzen. Bezogen auf 100 Teile der Isocyanatkomponente werden sie zu 0,00005 bis 10 Teile, bevorzugt 0,0001-10 Tle, besonders bevorzugt 0,001 bis 5 Teile, ganz besonders bevorzugt 0,005 bis 1 Teil Katalysator eingesetzt. Die Menge an notwendigem Katalysator ist auch abhängig vom Lösungsmittel/Wasser-Verhältnis. Bei einem ermittelten optimalen Lösungsmittel/Wasser-Verhältnis ist der Katalysatorbedarf am geringsten, jedoch immer noch Katalysator nötig. Durch eine erhöhte Katalysatormenge kann andererseits ein nicht ganz optimiertes Wasser/Lösungsmittel-Verhältnis auch gute Ergebnisse bringen. Die Menge an zur vollständigen Umwandlung von NCO- in $NH_2$-Gruppen notwendigem Katalysator ist auch von der Reaktionstemperatur abhängig. Es zeigte sich, daß diese Menge bei niedriger Temperatur, z.B. 45° C, höher sein muß als bei höherer Reaktionstemperatur, z.B. bei 100° C. Bei gegebener Katalysatormenge und unvollständiger Aminausbeute kann man diese durch Erhöhung der Reaktionstemperatur steigern.

Im Prinzip kann man auch ohne Katalysator arbeiten. Will man quantitative Umwandlung der NCO- in die $NH_2$-Gruppen dennoch erreichen, so muß man sehr hohe Temperaturen, ca. ab 150° C, anwenden. Bei tieferen Temperaturen sinkt die $NH_2$-Ausbeute immer weiter.

Als Katalysatoren können z.B. folgende basische anorganische und organische Salze, insbesondere neben den bereits erwähnten Katalysatoren eingesetzt werden:
Hydroxide von Alkali- und Erdalkalimetallen sowie Tetraalkylammoniumhydroxid, insbesondere NaOH und KOH, ferner lösliche Aluminate wie z.B. Na-Aluminat,
Carbonate von Alkalimetallen, insbesondere Soda und Pottasche,
Hydrogencarbonate von Alkalimetallen, insbesondere Natrium- und Kaliumhydrogencarbonat,
Alkali- und Erdalkalisalze von Mono- und Polycarbonsäuren ohne NCO-reaktive Gruppen,
Alkalisalze von gegebenenfalls mit NCO-nichtreaktiven Gruppen substituierten Phenolen und Thiophenolen,
lösliche Alkali- und Erdalkalisalze schwacher Säuren wie Cyansäure, Isocyansäure, Thiocyansäure, Isothiocyansäure Kieselsäure, Phosphor-III bis -V-Säuren,
Cyanwasserstoffsäure, Stickstoffwasserstoffsäure etc., Alkalimetallmercaptide und Sulfide bzw. Hydrogen(poly)sulfide,
$\beta$-Diketon-Verbindungen wie die Na-, K-, Mg- und Zinkacetylacetonate und Acetoacetate,
sowie einbaufähige Katalysatoren, die sowohl eine NCO-reaktionsfähige Gruppe wie Hydroxy-, Mercapto-, primäre und/oder sekundäre Aminogruppen oder Ketenaminal-Gruppen etc. als auch eine Gruppe wie

Alkoxid-, Mercaptid-, (Thio)Phenolat-, Carboxylat-, Dialkylzinn-, Dialkylamino-, Amidin- etc. -Gruppen enthalten, die die Reaktion von NCO-Gruppen mit NCO-reaktionsfähigen Gruppen wie z.B. OH, $NH_2$ katalysieren.

Geeignet sind auch Stickstoff enthaltende basische Katalysatoren, z.B. tertiäre Amine, vorzugsweise mit aliphatischer oder cycloaliphatischer Struktur, insbesondere Trialkylamine und Dialkylamino-alkyl-ether sowie acyclische, cyclische oder polycyclische Verbindungen mit mindestens einer Amidin- und/oder Guanidin-Struktur-Einheit. Geeignete Beispiele für diese Katalysatoren werden in DE-A 3 530 476 und 3 537 116 gegeben, Beispiele für acylierte tertiäre Aminderivate in der DE-A 2 523 633 und 2 732 292. Wirksam sind auch tertiäre Amine vom Pyridintyp und tertiäre Amine mit mindestens einem an das N-Atom gebundenen aromatischen Rest, z.B. Dimethylanilin. Insoweit es sich nicht um wasserlösliche tertiare Amine handelt, soll ihr Siedepunkt zweckmäßig unter 250 °C, bevorzugt unter 200 °C, liegen.

Als Katalysator können auch die aus der Literatur für die Katalyse der Isocyanatchemie bekannten mehrwertigen Metallverbindungen im erfindungsgemaßen Verfahren angewendet werden. Es handelt sich hier bevorzugt um Verbindungen des Zinns, Zinks oder Bleis, beispielsweise seien Dibutylzinndilaurat, Zinnoctoat oder Bleioctoat genannt; insgesamt sind sie weniger bevorzugt.

Für Mengen (insbesondere die Obergrenzen) an einzusetzenden Lösungsmitteln gelten folgende Randbedingungen dieses Verfahrens:
Pro 100 Teile NCO-Verbindungen a) sollen in der Hydrolyse-Reaktionsmischung ≧10, bevorzugt 20 bis 1.000, besonders bevorzugt 25 bis 300, Teile d) verwendet werden.

Es soll soviel Wasser und gegebenenfalls Lösungsmittel verwendet werden, daß eine im wesentlichen homogene (höchstens schwach trübe) oder vorzugsweise eine homogene, klare Lösung mit der NCO-Verbindung bei den Reaktionstemperaturen gebildet wird; besonders bevorzugt soviel Wasser, daß eine bei allen Verfahrenstemperaturen einphasige Mischung entsteht, jedoch immer unter Beachtung des oben gesagten über das Verhältnis von Solvens (DMF):Wasser und das von Wasser:NCO-Komponente a).

Die katalytisch wirkenden Verbindungen werden im allgemeinen den Lösungsmitteln und Wasser zugesetzt. Die Zugabe zur Isocyanatgruppen-haltigen Verbindung ist u.U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung von <90, vorzugsweise ≦80 Gew.-% in der Reaktionsmischung aufrecht zu erhalten.

Es ist dabei aber unter Beachtung der obengenannten Beziehungen zwischen Wasser-, Solvens- und Isocyanat-Mengen mindestens so viel Lösungsmittel mitzuverwenden, daß eine weitgehend homogene, vorzugsweise homogene, Reaktionsmischung verbleibt.

Als Nebenreaktion kann im Verfahren Vorverlängerung auftreten, d.h. Isocyanat und bereits gebildetes Amin reagieren unter Kettenverknüpfung zu Harnstoffen. Diese Nebenreaktion läßt sich durch Arbeiten in verdünnter Lösung, der Verwendung der genannten Katalysatoren und der Einhaltung relativ hoher Reaktionstemperaturen, z.B. 80 bis 130 °C, weitgehend zurückdrängen. Zwar ist ein möglichst geringes Ausmaß dieser Nebenreaktionen erwünscht, aus ökonomischen Gründen kann aber auch ein gewisser Grad an Vorverlängerung in Kauf genommen werden.

Die genannte Methode erlaubt jedoch bei ausreichender Beachtung der Verfahrensparameter eine praktisch vollständige Umwandlung von NCO- in $NH_2$-Gruppen.

Die Reaktion wird bevorzugt in homogener Phase durchgeführt, Durch ein geringfügiges Überdosieren der Wassermenge oder der Menge der NCO-Verbindung kann gegebenenfalls eine Trübung der Reaktionsmischung erhalten werden, da die Ausgangsstoffe nicht mehr vollständig gelöst sind,

Wie bereits ausgeführt, kann die Reaktion bei Temperaturen von 20 bis 210 °C durchgeführt werden. Bevorzugt wird jedoch bei Temperaturen von 40 bis 150 °C, insbesondere von 80 bis 130 °C, gearbeitet, da hierbei die besten Raum/Zeit-Ausbeuten bei gleichzeitig hoher Löslichkeit und überraschenderweise geringster Harnstoff-Verlängerung erreicht werden. Unter besonderen Umständen kann es auch notwenig werden, die Reaktion unter Druck durchzuführen, um ausreichend hohe Temperaturen zu erhalten. Andererseits ist es oft möglich, bei Druckreaktionen die Katalysatormenge zu vermindern bzw, katalysatorfrei zu arbeiten, den Verdünnungsgrad zu vermindern oder schwächer basische Katalysatoren einzusetzen.

Das Einsetzen der Reaktion ist durch die fast spontane Abspaltung von $CO_2$ zu erkennen, die auch bereits bei niedrigen Temperaturen, z.B. 10° C, beobachtbar ist. Es ist jedoch erheblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanten gesorgt wird, was im wesentlichen durch die Verwendung der Lösungsmittel sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

Zur kontinuierlichen oder diskontinuierlichen Ausführungsform gilt das in DE-OS 3 223 397, S. 32. Z. 20 bis S. 35, Z. 10 Offenbarte.

Auch die Aufarbeitung kann kontinuierlich oder diskontinuierlich erfolgen. Die Aufarbeitung des Reaktionsgemisches geschieht gewöhnlich destillativ, extraktiv oder über eine Phasentrennung oder mit einer Kombination dieser Methoden.

Enthält die NCO-Gruppen-haltige Verbindung - bedingt durch ihre Herstellung - noch freies, d.h. monomeres Isocyanat, so kann u.U. das hieraus entstehende monomere Amin bei der Aufarbeitung durch Phasentrennung sich in der Wasser/Lösungsmittelphase stark anreichern. Das durch diese einfache Aufarbeitung erhaltene Polyaminopolyol ist dann praktisch monomerenfrei. Es kann sich dann aber empfehlen, die wäßrige Lösung durch Aufarbeitung von monomerem Amin weitgehend zu befreien, bevor sie wiederverwendet wird.

Bevorzugte Aufarbeitungsform:
Bevorzugt erfolgt die Aufarbeitung des Reaktionsgemisches ohne Phasentrennung so, daß nach Beendigung der Reaktion (keine $CO_2$-Entwicklung mehr zu beobachten) das Lösungsmittel bzw. Lösungsmittel/Wasser-Gemisch abdestilliert, bevorzugt unter Anwendung von Vakuum, z.B. 1 bis 700 Torr, wird, wobei zur Entfernung flüchtiger Reste noch höheres Vakuum, z.B. 0,001 bis 1 Torr, angelegt werden kann. Ein Temperaturbereich von anfangs ca. 60 bis 100° C, später 80 bis 100° C, hat sich hierbei bewährt. Das abdestillierte Lösungsmittel kann, gegebenenfalls mehrmals, wiederverwendet werden.

Die nach der Aufarbeitung erhaltenen Polyaminoalkohole stellen im allgemeinen farblose bis schwach gefärbte, nieder- bis mittelviskose (gegebenenfalls höherschmelzende) Produkte mit den bereits angegebenen Amino/Hydroxyl-Gruppengehalten dar. Diese Polyaminopolyole weisen entsprechend ihren Ausgangsstoffen ferner Urethan- und/oder Harnstoff- und/oder Uretdion- und/oder Isocyanurat- und/oder Biuretgruppen, sowie gegebenenfalls Ether- und/oder Acetal- und/oder Carbonat-und/oder Ester-und/oder Thioether und/oder Dialkylsiloxangruppen und/oder die Reste von Polybutadienen auf, wie sie bereits in den NCO-Verbindungen vorgelegen haben. Durch Nebenreaktionen können jedoch auch zusätzliche Bindungen entstehen, z.B. Harnstoffgruppen aus bereits verseiften Anteilen und noch verbliebenen NCO-Gruppen während der Hydrolysereaktion. Die Menge der in den Polyaminopolyolen enthaltenen primären aromatischen Aminogruppen entspricht maximal der Menge der NCO-Gruppen in der NCO-Komponente g).

Verwendung der erfindungsgemäß erhaltenen Produkte

Die erfindungsgemäß erhaltenen Polyhydroxylverbindungen, bevorzugt mit aromatischen primären Aminogruppen, werden wegen ihres niedrigen Dampfdruckes vorzugsweise als Reaktionspartner für (gegebenenfalls blockierte) Polyisocyanate bei der Herstellung von Polyurethanharnstoffen, gegebenenfalls zelligen Polyurethan(harn)kunststoffen oder Polyurethan(harnstoff)schaumstoffen eingesetzt, wobei sie gegebenenfalls auch mit anderen niedermolekularen (Molekulargewichte 32 bis 399) und/oder höhermolekularen (Molekulargewichte 400 bis ca. 12.000) Verbindungen mit gegenüber Isocyanaten reaktiven Gruppen (Hydroxyl, Amino, Thiol, Hydrazid- und ähnlichen Gruppen) kombiniert werden können.
Geeignete Ausgangskomponenten für die an sich bekannte Herstellung von Polyurethankunststoffen werden oben im Zusammenhang mit der Prepolymerherstellung bzw. auch in DE-A 2 302 564, DE-A 2 432 764, US-PS 3 903 679 sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendenden Hilfs- und Zusatzstoffe.

Die Verwendung der erfindungsgemäß hergestellten Polyaminohydroxylverbindungen zur Herstellung von Polyurethan(harnstoff)en ist ebenfalls Gegenstand der vorliegenden Erfindung: Es können so auch z.B. Elastomere, Beschichtungen, Fäden in der Applikation aus Schmelzen, Lösungen, Dispersionen oder Reaktivkomponentenmischungen hergestellt werden.

Hauptverwendungszweck ist jedoch die Verwendung zur Herstellung von Formteilen mit geschlossener Oberfläche nach dem RIM-Verfahren in geschlossenen Formen (reaction injection molding, Reaktionsspritzguß), die z.B. im Fahrzeugbau Verwendung finden (als Kotflügel, Türblätter, Schweller, Stoßfänger (bumper), Rundumverkleidungen, Spoiler u.ä.).

Als ganz besonders geeignet für das RIM-Verfahren haben sich dabei solche Polyaminohydroxylverbindungen der erfindungsgemäßen Art herausgestellt, welche 2 ± 0,25, bevorzugt etwa 2 ± 0,1 Äquivalente an primären Aminogruppen enthalten.

Das Vorhandensein von etwa zwei primären Aminogruppen in den urethan- und/oder harnstoffgruppenhaltigen Polyaminohydroxylverbindungen ergibt einen besonders glatten und günstigen Polymeraufbau im RIM-Verfahren und entsprechend auch günstige mechanische Werte.

Die Methoden zur Herstellung von Formteilen (aus Integralschaumstoffen) und der RIM-Technologie werden beispielsweise in dem Handbuch BAYER-Polyurethane, Best.-Nr. PU 50025/BAYER AG, D-5090 Leverkusen, Ausgabe 1.79, D100-779/847990, S. 139-178 oder im Kunststoff-Handbuch, Bd.7, Polyurethane

(C. Hanser-Verlag), München, Wien, 1983, S. 333-390, ausführlich beschrieben.

Bei Verwendung der erfindungsgemäßen Polyaminohydroxyl-Verbindungen, insbesondere solchen, bei denen die Bedingung der Formel "Eq" erfüllt sind, und ganz besonders bei solchen, welche auf Basis von trifunktionellen Polyethern aufgebaut sind, werden in den Formteilen erhöhte Steifigkeit - sowohl bei Raumtemperatur als auch insbesondere bei erhöhten Temperaturen (z.B. 120 °C) -erzielt, ein erhöhter HDT-Wert (heat-distortion-temperature-Wert) und ein deutlich verbesserter "sag"-Wert gemessen (im Vergleich zu entsprechenden Polyaminoverbindungen mit nur Aminoendgruppen bzw. zu entsprechenden Polyhydroxylverbindungen mit nur OH-Gruppen oder auch entsprechenden Mischungen aus diesen Komponenten).

Weitere Verwendungszwecke der erfindungsgemäß hergestellten Polyaminohydroxylverbindungen sind z.B. Kupplungskomponenten für Diazofarbstoffe, Härter für Epoxid- und Phenolharze, sowie alle anderen an sich bekannten Reaktionen von Aminen wie Amid-oder Imidbildung.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

## Beispiele

### Beispiel 1

400 g eines linearen Hydroxyl-Polyethers der OH-Zahl 28, hergestellt durch blockweise Addition von zuerst 80 Gew.-% Propylenoxid und dann 20 Gew.-% Ethylenoxid auf Propylenglykol, und 22,2 g Isophorondiisocyanat (IPDI) werden zuerst 3 Stunden bei 40 ° C und dann 3 Stunden bei 120 ° C gerührt. Der NCO-Wert dieses NCO/OH-Prepolymers beträgt dann 0,7 Gew.-% (th. 0,99 % NCO für ein 1:1-Addukt aus diesem Polyether und IPDI mit einer freien NCO- und einer freien Hydroxylgruppe). Dieses Isocyanat- und Hydroxylgruppen tragende Prepolymer wird sofort in das Amin umgewandelt:

Vorgelegt wird bei 20 ° C ein Gemisch aus 400 g Wasser, 1 g eines Emulgators und 4 g (0,1 Mol) NaOH. Bei dieser Temperatur wird unter Rühren innerhalb von 30 Minuten das obige Prepolymer einlaufen gelassen. Nach 5 min Nachrühren bei dieser Temperatur wird 1 Stunde bei 80 ° C gerührt, dann bei 100 ° C/18 mbar, später 100 ° C/0,13 mbar das Wasser abdestilliert und das Salz abfiltriert.

| | |
|---|---|
| NH-Zahl ($HClO_4$): | 26,3 mg KOH/g (aus Säure-Titration) |
| NH/OH-Zahl ($Ac_2O$/Py): | 36,38 mg KOH/g ($NH_2$ plus OH-Gruppen erfaßt) |
| Säure-Zahl ($Ac_2O$/Py): | 0,6 mg KOH/g |
| IPDA-Gehalt (HPLC): | 0,997 % |
| Viskosität bei 23 ° C: | 4.400 mPas |

### Beispiel 2

In diesem Beispiel wird ein NCO/OH-Prepolymer des NCO-Gehaltes 1,83 %, hergestellt aus 1.000 g (0,500 Mol) eines Polypropylenglykols der OH-Zahl 56 und 87 g (0,500 Mol) Toluylendiisocyanat verwendet. Es wird sofort nach seiner Herstellung und Erreichen des genannten NCO-Gehaltes verarbeitet; da anderenfalls eine Weiterreaktion zu einem NCO-freien hochpolymeren Polyurethan erfolgen würde.

Vorgelegt wird eine Mischung aus 500 g Wasser, 28,4 g NaOH (0,71 mol), 0,2 g eines Emulgators (Mersolat® H der Bayer AG) bei 20 ° C. Unter Rühren wird in 20 min bei dieser Temperatur das obige Prepolymer zugegeben und dann 15 min bei dieser Temperatur nachgerührt. Dann wird wie bei Beispiel 1 aufgearbeitet:

| | |
|---|---|
| NH-Zahl ($HClO_4$): | 20,4 mg KOH/g |
| NH/OH-Zahl ($Ac_2O$/Py): | 48,7 mg KOH/g |
| Säure-Zahl ($Ac_2O$/Py): | 0,14 mg KOH/g |
| TDA-Gehalt (HPLC): | 0,297 % |
| $H_2O$: | 0,10 % (Karl Fischer) |
| Viskosität bei 23 ° C: | 8.500 mPas |

Beispiel 3

In diesem Beispiel wird ein Prepolymer des NCO-Gehaltes 1,3 %, hergestellt aus 1.000 g eines Polyethertriols der OH-Zahl 27 (hergestellt durch blockweise Addition von zuerst 78% Propylenoxid und dann 22 Gew.-% Ethylenoxid an Trimethylolpropan) und 43,4 g Toluylen-2,4-diisocyanat in 1-stündiger Reaktion bei 80° C, verwendet. Es wird sofort nach seiner Herstellung verarbeitet.

Vorgelegt wird eine Mischung aus 1 l Wasser, 22,3 g NaOH (0,56 Mol) und 0,5 g Mersolat H bei 20° C. Unter Rühren wird bei dieser Temperatur in 15 min obiges NCO/OH-Prepolymer zugegeben, 15 min bei dieser Temperatur nachgerührt und dann wie in Beispiel 1 aufgearbeitet:

| | |
|---|---|
| NH-Zahl ($HClO_4$): | 19,5 mg KOH/g (th. 17,2 mg KOH/g) |
| NH/OH-Zahl ($Ac_2O$/Py): | 36,5 mg KOH/g |
| Säure-Zahl ($Ac_2O$/Py): | 0,2 mg KOH/g |
| TDA (HPLC): | 0,062 % |
| Viskosität bei 23° C: | 3.800 mPas |

Beispiel 4

In diesem Beispiel wird ein NCO/OH-Prepolymer des NCO-Gehalts 1,3 % hergestellt aus 1.000 g des Polyethers aus Beispiel 3 und 55,9 g Toluylen-2,4-diisocyanat, durch 90 Minuten lange Reaktion bei 80° C, verwendet. Es wurde sofort nach Erreichen des angegebenen NCO-Wertes weiterverarbeitet:

Vorgelegt wird 20° C kaltes Gemisch aus 1.000 g Wasser, 19 g NaOH (0,475 Mol) und 1 g Mersolat H. Innerhalb 30 min wird 1 kg des obigen NCO/OH-Prepolymers dazugegeben, 10 min nachgerührt und dann unter Rühren 1 Stunde bei 80° C gehalten. Aufarbeitung des Ansatzes wie in Beispiel 1.

| | |
|---|---|
| NH-Zahl ($HClO_4$): | 21,5 mg KOH/g |
| NH/OH-Zahl ($Ac_2O$/Py): | 32,2 mg KOH/g |
| TDA (HPLC): | 0,212 % |
| Säure-Zahl ($Ac_2O$/Py): | <0,1 mg KOH/g |
| Viskosität bei 23° C: | 6.500 mPas |

Beispiel 5

In diesem Beispiel wird ein NCO/OH-Prepolymer des NCO-Gehaltes 0,61 % eingesetzt, hergestellt aus 9.500 g eines Polyethers der OH-Zahl 28 (hergestellt durch blockweise Addition von zuerst Propylenoxid und dann 17 Gew.-% Ethylenoxid an Trimethylolpropan) und 276 g Toluylen-2,4-diisocyanat durch 5 Stunden Rühren bei 60° C. Bei diesem Prepolymer kommen im Durchschnitt ca. zwei OH-Gruppen auf eine NCO-Gruppe. Es wird sofort nach seiner Herstellung verarbeitet.

Vorgelegt wird ein 90° C heißes Gemisch aus 1.000 ml Dimethylformamid (DMF), 50 ml Wasser und 0,1 g KOH. Innerhalb von 10 min werden bei dieser Temperatur 1.000 g des obigen NCO/OH-Prepolymers zugegeben. Nach Ende der Zugabe (und gleichzeitig Ende der $CO_2$-Entwicklung) wird das Lösungsmittel und das überschüssige Wasser durch Anlegen von Vakuum (zuerst 19 mbar, dann 0,13 mbar) bei Erhöhung der Bad-Temperatur bis auf 100° C, abdestilliert.

| | |
|---|---|
| NH-Zahl ($HClO_4$): | 10,4 mg KOH/g |
| NH/OH-Zahl ($Ac_2O$/Py): | 30,4 mg KOH/g |
| Säure-Zahl ($Ac_2$/Py): | <0,2 mg KOH/g |
| TDA-Gehalt (HPLC): | 0,305 % |
| Viskosität bei 23° C: | 2.500 mPas |

Beispiel 6

In diesem Beispiel wird ein NCO/OH-Prepolymer des NCO-Gehaltes 1,5 % eingesetzt, hergestellt aus 500 g des Polyethers aus Beispiel 5 und 29 g Toluylen-2,4-diisocyanat durch 3,5-stündige Umsetzung bei 60° C. Bei diesem NCO/OH-Prepolymer kommen im Durchschnitt auf eine OH- ca. zwei NCO-Gruppen. Es wird sofort nach seiner Herstellung weiterverarbeitet:

Vorgelegt wird ein 90° C heißes Gemisch aus 1.000 ml DMF, 50 ml Wasser und 0,1 g KOH. Innerhalb von 12 min werden unter Rühren 1.000 g des obigen Prepolymers zugegeben und dann wie bei Beispiel 5 aufgearbeitet.

| | |
|---|---|
| NH-Zahl ($HClO_4$): | 20,4 mg KOH/g |
| NH/OH-Zahl ($Ac_2O$/Py): | 31,6 mg KOH/g |
| TDA-Gehalt (HPLC): | 0,549 % |
| Viskosität bei 23° C: | 3.200 mPas |

Beispiel 7

In diesem Beispiel wird ein Prepolymer des NCO-Gehalts 2,1 %, hergestellt aus 1.000 g eines Polyethers der OH-Zahl 50 durch 3-stündige Umsetzung bei 60° C mit 144,5 g 2,4-Toluylendiisocyanat, eingesetzt. Der eingesetzte Polyether ist ein Gemisch zweier Polyether (A) und (B). Polyether (A) entsteht durch Blockaddition von zuerst 87 Gew.-% Propylenoxid und dann 13 Gew.-Ethylenoxid auf Glycerin und hatte eine OH-Zahl von 35. Polyether (B) ist im Durchschnitt 2,4-funktionell und durch Propylenoxidaddition auf ein Wasser/Trimethylolpropan-Gemisch mit dem OH-Äquivalentverhältnis von 53 %:47 % hergestellt. Seine OH-Zahl beträgt 56. Die OH-Zahl des Gemischs beträgt 50, die Mischfunktionalität 2,5. Das NCO/OH-Prepolymer wurde nach 12-stündigem Stehen nach der Herstellung weiterverarbeitet. Während dieser Zeit war der NCO-Wert von 2,3 % auf 2,1 % abgefallen. In diesem Prepolymer kommt im Durchschnitt auf zwei NCO-Gruppen eine Hydroxylgruppe.

Vorgelegt wird ein Gemisch aus 1.300 g DMF, 40 ml Wasser und 0,02 g KOH. Innerhalb 20 min wird bei einer Innentemperatur von 90° C 960 g des obigen Prepolymers (NCO-Gehalt 2,1 %) zugegeben und dann wie bei Beispiel 5 aufgearbeitet.

| | |
|---|---|
| NH-Zahl ($HClO_4$): | 30,9 mg KOH/g |
| NH/OH-Zahl ($Ac_2O$/Py): | 50,8 mg KOH/g |
| Säure-Zahl ($Ac_2O$/Py): | <0,1 mg KOH/g |
| TDA-Gehalt (HPLC): | 1,364 % |
| Viskosität bei 25° C: | 3.740 mPas |

Beispiel 8

In diesem Beispiel wird ein NCO/OH-Prepolymer des NCO-Gehaltes 1,06 % verwendet, hergestellt aus 1.100 g des Polyethergemisches aus Beispiel 7 durch 3-stündige Umsetzung bei 60° C mit 57 g Toluylen-2,4-diisocyanat. Bei diesem Prepolymer kommt im Durchschnitt auf zwei OH-eine NCO-Gruppe.

Vorgelegt wird ein Gemisch aus 700 g DMF, 21 ml Wasser und 0,01 g KOH. Unter Rühren wird innerhalb von 20 min 1.000 g des obigen Prepolymers bei einer Innentemperatur von 90° C zugegeben und wie in Beispiel 5 aufgearbeitet.

| | |
|---|---|
| NH-Zahl ($HClO_4$): | 13,5 mg KOH/g |
| NH/OH-Zahl ($Ac_2O$/Py): | 47,0 mg KOH/g |
| Säure-Zahl ($Ac_2O$/Py): | <0,1 mg KOH/g |
| TDA-Gehalt (HPLC): | 0,608 % |
| Viskosität bei 25° C: | 1.870 mPas |

Beispiel 9

In diesem Beispiel wird ein NCO/OH-Prepolymer verwendet, das aus 1.700 g des Polyethergemisches aus Beispiel 7 durch 4-stündige Umsetzung bei 60 °C mit 238 g Toluylen-2,4-diisocyanat hergestellt wurde. Es hat einen NCO-Gehalt von 2,9 %; in ihm kommen im Durchschnitt auf zwei NCO-Gruppen eine Hydroxylgruppe.

Vorgelegt wird ein Gemisch aus 600 g DMF, 20 ml Wasser und 0,03 g KOH. Bei einer Innentemperatur von 90 °C wird unter Rühren 0,5 kg des obigen Prepolymers zugegeben und der Ansatz, wie in Beispiel 5 beschrieben, aufgearbeitet.

| | |
|---|---|
| NH-Zahl ($HClO_4$): | 38,6 mg KOH/g |
| NH/OH-Zahl ($Ac_2O$/Py): | 51,4 mg KOH/g |
| Säure-Zahl ($Ac_2O$/Py): | <0,05 mg KOH/g |
| TDA-Gehalt (HPLC): | 0,603 % |
| Viskosität bei 25 °C: | 8.300 mPas |

Beispiel 10

In diesem Beispiel wird ein NCO/OH-Prepolymer (1,3 % NCO) verwendet, hergestellt durch Umsetzung von 1.200 g des Polyethers Beispiel 5 in 3-stündiger Reaktionsdauer bei 50 °C mit 100,8 g 4,4'-Diisocyanatodiphenylmethan. Im Durchschnitt kommen im NCO/OH-Prepolymer auf eine Hydroxylgruppe zwei NCO-Gruppen.

Vorgelegt wird ein Gemisch aus 1.000 g DMF, 10 g Wasser und 0,08 g KOH. Bei 90 ° C wird in 10 min 0,5 kg des obigen Prepolymers zugegeben und wie in Beispiel 5 aufgearbeitet.

| | |
|---|---|
| NH-Zahl ($HClO_4$): | 23,5 mg KOH/g |
| NH/OH-Zahl ($Ac_2O$/Py): | 36,8 mg KOH/g |
| MDA-Gehalt (HPLC): | 2,12 % |
| Säure-Zahl ($Ac_2O$/Py): | <0,2 mg KOH/g |
| Viskosität bei 23 ° C: | 6.000 mPas |

Beispiel 11

500 g eines Polyetherpolyols der OH-Zahl 56, erhalten durch blockweise Addition von 95,3 Gew.-% Propylenoxid und dann 4.7 Gew.-% Ethylenoxid an Glyzerin (= 0.5 mol OH) werden mit 16,4 g (0.166 mol) n-Butylisocyanat versetzt und 3 l bei 90 ° C und dann 14 h bei 80 ° C gerührt. Dann läßt sich IR-spektroskopisch kein NCO mehr nachweisen.

Danach wird dieses Produkt mit 29 g (0.166 mol) 2,4-Diisocyanatotoluol versetzt und 90 min bei 60 ° C gerührt. Dann ist der NCO-Gehalt auf 1.26 % (ber. 1.28%) gefallen.

Schließlich werden 450 g dieses Prepolymers bei 90 ° C zu einer vorgelegten Mischung aus 300 g Dimethylformamid, 4.8 ml Wasser und 0.02 g KOH innerhalb 20 min gegeben. Nach Beendigung der Zugabe wird noch 5 min bei 90 ° C nachgerührt und dann die flüchtigen Bestandteile abdestilliert. Es hinterbleibt ein Produkt mit endständigen n-Butylurethan-, 4-Methyl-3-aminophenylurethan- und Hydroxylgruppen.

NH-Zahl ($HClO_4$): 15.7 mg KOH/g (th. nach NCO-Gehalt 16.9)
NH/OH-Zahl ($Ac_2O$/Py): 36.3 mg KOH/g
TDA-Gehalt (HPLC): 0,006 %
Viskosität bei 25 ° C: 2000 mPas

Anwendungsbeispiel

In diesem Beispiel werden Polyurethanharnstoff-Elastomer-Formteile hergestellt und ihre mechanischen Eigenschaften miteinander verglichen. Die Herstellung erfolgt unter Verwendung von Rezepturen, deren NCO-reaktive Komponente

a) eine Polyaminohydroxylverbindung gemäß Erfindung (Polyol C) bzw.

b) geeignete Vergleichsverbindungen (Polyole A,B, D) enthielten.

Zur Herstellung der Formteile wurde eine Kolbenhochdruckdosieranlage mit MQ-Mischkopf (Maschinenfabriken Hennecke, St. Augustin) und Zwangssteuerung verwendet. Der Betriebsdruck betrug 200 bar.

Die nachstehenden Polyol- und Isocyanatkomponenten werden unter Verwendung dieser Apparatur innig miteinander vermischt und zu Formkunststoffen der nachstehend genannten mechanischen Eigenschaften verarbeitet. Die Rohstoff-Temperaturen betrugen jeweils 35 bis 40° C, die Formtemperatur lag bei 60° C. Als Form wurde eine solche aus poliertem Stahl der Innenabmessungen 200 x 300 x 4 mm verwendet, deren Innenwände mit einem äußeren Trennmittel auf Wachsbasis (®Acmos Fluorican 36/34 der Fa. Acmos) beschichtet waren. Die Einfüllzeit betrug ca. 1 sec, die Formstandzeit 30 sec.

Rezepturen I-IV

NCO-reaktive Komponenten:

75 Tle. Polyole A, B, C oder D (für Rezepturen I-IV)
25 Tle. eines Gemisches aus 65 Teilen 1-Methyl-3,5-diethyl-2,4-diaminobenzol und 35 Teilen 1-Methyl-3,5-diethyl-2,6-diaminobenzol ("Detda")
0,3 Tle. Dabco 33 LV (aminischer Katalysator der Air Products)
0,1 Tle. UL 28 (Zinn-Katalysator der Witco)

Isocyanat-Komponente:

PA 100, ein handelsübliches Isocyanat auf Diphenylmethandiisocyanat-Basis der BAYER AG, NCO-Gehalt 23 %

Kennzahlen: 100. 110

| | |
|---|---|
| Polyol A: | Polyethertriol der OH-Zahl 28, erhalten durch blockweise Addition von 83 Gew.-% Propylenoxid und dann 17 Gew.-% Ethylenoxid an Trimethylolpropan. |
| Polyol B: | Polyetheramin der NH-Zahl 24,5, erhalten durch Hydrolyse eines NCO-Prepolymers aus Polyol A und 2,4-Toluylendiisocyanat des NCO-Gehaltes 1,9 Gew.-% (Verfahren nach DE-A 36 13 249) |
| Polyol C (erfindungsgemäß): | Polyhydroxylamin-Verbindung der (NH + OH)-Zahl 31,6 aus Beispiel 6. |
| Polyol D: | Gemisch aus $66,\overline{6}$ Teilen Polyol B und $33,\overline{3}$ Teilen Polyol A |

**Wertetabelle**

| Rezeptur | I | | II | | III | | IV | | |
|---|---|---|---|---|---|---|---|---|---|
| Kennzahl | 100 | 110 | 100 | 110 | 100 | 110 | 100 | 110 | |
| Zugfestigkeit | 32,4 | 41,2 | 33,1 | 39,9 | 34,3 | 39,7 | 38,5 | 39,4 | MPa |
| Bruchdehnung | 260 | 250 | 289 | 247 | 191 | 155 | 316 | 282 | % |
| Weiterreißfestigkeit | 90 | 88 | 86 | 54 | 63 | 47 | 34,3 | 29,1 | kN/m |
| sag-Test 1 h/160° C 10 cm overhang | 10,9 | 6,9 | 13,6 | 7,9 | 6,1 | 4,4 | 17,0 | 9,3 | mm |
| shore D-Härte | 62 | 62 | 64 | 67 | 72 | 71 | 66 | 66 | - |
| Biege-E-Modul | 512 | 570 | 682 | 697 | 725 | 795 | 483 | 555 | MPa |
| HDT-Wert (ISO-R-75 B) | 85 | 92 | 89 | 98 | 122 | 123 | 103 | 109 | °C |
| Schlagzugversuch-Dehnung | 238 | 189 | 193 | 181 | 156 | 126 | - | - | % |

Der Versuch zeigt 1., daß Rezeptur III (das erfindungsgemäße Polyetherhydroxylamin enthaltend) die höchste Steifigkeit und besten Wärmestand hat, verglichen mit der reinen Polyhydroxyl- oder der reinen Polyamin-Verbindung, und

2., daß Polyol C nicht durch ein entsprechendes Gemisch der Polyole A und B ersetzt werden kann.

## Patentansprüche

1. Verfahren zur Herstellung von Verbindungen, welche einen Gehalt an Urethan- und/oder Harnstoffgruppen von 0,295 bis 29,5 Gew.-%, ein Molekulargewicht von 400 - 12000 und einen Gehalt an primären Amino- und Hydroxylgruppen von zusammen 0,165 - 16,5 Gew.-% aufweisen, wobei die gesamte

Funktionalität von Amino- und Hydroxylgruppen > 1 bis 8 beträgt und wobei das Äquivalentverhältnis zwischen Amino- und Hydroxylgruppen zwischen 99 : 1 und 5 : 95 liegt, durch Hydrolyse von NCO-Gruppen aufweisenden Verbindungen, dadurch gekennzeichnet, daß man

a) in einer 1. Stufe ein Polyisocyanat mit einer Hydroxy- sowie gegebenenfalls Amino- und gegebenenfalls Thiolgruppen enthaltenden Verbindung mit einem MG von 62 - 12000 umsetzt, bis ein Vorpolymer gebildet worden ist, welches 0,3 - 25,9 Gew.-% an freien NCO-Gruppen und noch so viele freie Hydroxylgruppen enthält, daß das Äquivalentverhältnis zwischen NCO- und OH-Gruppen zwischen 99 : 1 und 5 : 95 liegt, und

b) anschließend in einer 2. Stufe dieses Vorpolymer mit mindestens 0,75 Mol Wasser pro NCO-Gruppe, gegebenenfalls in Gegenwart von Lösungsmitteln und gegebenenfalls in Gegenwart von katalytisch wirkenden Verbindungen in an sich bekannter Weise hydrolysiert.

**2.** Verfahren nach Anspruch 1, dadurch gekennzeichnet, daß man das NCO/OH-Gruppen-haltige Vorpolymer mit Wasser in Gegenwart von basischen Katalysatoren und in Gegenwart von mindestens zum Teil wassermischbaren Lösungsmitteln in im wesentlichen homogener Phase bei einer Temperatur zwischen 25 und 210 °C hydrolysiert.

**3.** Verfahren nach Anspruch 2, dadurch gekennzeichnet, daß als wassermischbares Lösungsmittel Dimethylformamid eingesetzt wird.

**4.** Verwendung der nach dem Verfahren gemäß einem der Ansprüche 1 bis 3 erhältlichen Verbindungen als Ausgangsmaterial bei der Herstellung von gegebenenfalls verschäumten Polyurethan-Polyharnstoffen.

**5.** Verwendung gemäß Anspruch 4 bei der Herstellung von Elastomeren-Formteilen mit Oberflächenhaut in geschlossenen Formen nach dem RIM-Verfahren.

**Claims**

**1.** A process for the preparation of compounds having a molecular weight of from 400 - 12000 containing from 0.295 to 29.5% by weight of urethane and/or urea groups and a total of from 0.165 - 16.5% by weight of primary amino and hydroxyl groups, the total functionality of amino groups and hydroxyl groups being from >1 to 8 and the equivalent ratio of amino groups to hydroxyl groups being from 99 : 1 to 5 : 95 by the hydrolysis of NCO group-containing compounds, characterised in that

a) in a 1st stage, a polyisocyanate is reacted with a compound having a molecular weight of from 62 - 12000 containing hydroxyl and optionally amino and optionally thiol groups until a prepolymer has been formed which contains from 0.3 - 25.9% by weight of free NCO groups and still contains so many free hydroxyl groups that the equivalent ratio of NCO groups to OH groups is from 99:1 to 5:95 and

b) in a 2nd stage, this prepolymer is subsequently hydrolysed in known manner with at least 0.75 mol of water per NCO group, optionally in the presence of solvents and optionally in the presence of catalytically active compounds.

**2.** A process according to Claim 1, characterised in that the NCO/OH group-containing prepolymer is hydrolysed with water at a temperature of from 25 to 210 °C in a substantially homogeneous phase in the presence of basic catalysts and in the presence of solvents which are at least partly water-miscible.

**3.** A process according to Claim 2, characterised in that the water-miscible solvent used is dimethylformamide.

**4.** The use of the compounds obtainable by the process according to one of the Claims 1 to 3 as starting material for the production of optionally foamed polyurethane polyureas.

**5.** The use according to Claim 4 for the production of elastomeric mouldings having a surface skin inside closed moulds by the RIM process.

## Revendications

**1.** Procédé pour la préparation de composés qui présentent une teneur en groupes uréthanne et/ou urée de 0,295 à 29,5% en poids, un poids moléculaire de 400-12000 et une teneur en groupes amino primaires et hydroxyle de conjointement 0,165-16,5% en poids, dans lequel la fonctionnalité totale des groupes amino et hydroxyle s'elève à une valeur > 1 à 8, et dans lequel le rapport d'équivalent entre les groupes amino et hydroxyle se situe entre 99:1 et 5:95, par hydrolyse de composés présentant des groupes NCO, caractérisé en ce que

a) dans une première étape, on fait réagir un polyisocyanate avec un composé contenant des groupes hydroxyle, ainsi qu'éventuellement des groupes amino et éventuellement des groupes thiol ayant un poids moléculaire de 62-12000 jusqu'à ce qu'un prépolymère se soit formé, qui contient de 0,3 à 25,9% en poids en groupes NCO libres et une quantité résiduelle en groupes hydroxyle libres, telle que le rapport d'équivalent entre les groupes NCO et OH se situe entre 99:1 et 5:95, et

b) ensuite, dans une seconde étape, d'une manière connue en soi, on hydrolyse ce prépolymère avec au moins 0,75 mole d'eau par groupe NCO, éventuellement en présence de solvants et éventuellement en présence de composés à action catalytique.

**2.** Procédé selon la revendication 1, caractérisé en ce qu'on hydrolyse le prépolymère contenant des groupes NCO/OH avec de l'eau en présence de catalyseurs basiques et en présence de solvants au moins partiellement miscibles à l'eau, dans une phase essentiellement homogène, à une température entre 25 et 210 °C.

**3.** Procédé selon la revendication 2, caractérisé en ce que, comme solvant miscible à l'eau, on met en oeuvre du diméthylformamide.

**4.** Utilisation des composés que l'on obtient conformément au procédé selon l'une quelconque des revendications 1 à 3, comme matière de départ lors de la préparation de polyuréthanne-polyurées éventuellement transformées en mousse.

**5.** Utilisation selon la revendication 4, lors de la préparation d'éléments moulés en élastomère à croûte superficielle dans des moules fermés, d'après le procédé RIM (= procédé de moulage réactif par injection).